(19) Europäisches Patentamt
European Patent Office
Office européen des brevets

(11) **EP 2 370 630 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **09778900.2**

(22) Anmeldetag: **03.12.2009**

(51) Int Cl.:
**D21H 19/40** *(2006.01)* **D21H 21/10** *(2006.01)*
**D21C 9/08** *(2006.01)* **D21H 17/13** *(2006.01)*
**C01B 33/20** *(2006.01)* **C08K 3/36** *(2006.01)*

(86) Internationale Anmeldenummer:
**PCT/EP2009/008638**

(87) Internationale Veröffentlichungsnummer:
**WO 2010/063475 (10.06.2010 Gazette 2010/23)**

(54) **VERWENDUNG EINER ZUSAMMENSETZUNG AUF BASIS VON SCHICHTSILIKAT ZUR HERSTELLUNG VON PAPIER, SOWIE SCHICHTSILIKAT-ZUSAMMENSETZUNG UND VERFAHREN ZU DEREN HERSTELLUNG**

USE OF A COMPOSITION BASED ON LAYERED SILICATE FOR PRODUCTION OF PAPER AS WELL AS A LAYERED SILICATE COMPOSITION AND PROCESS FOR ITS MANUFACTURE

UTILISATION D'UNE COMPOSITION BASEE DE SILICATE A COUCHES POUR LA PRODUCTION DU PAPIER AINSI QU'UNE COMPOSITION DE SILICATE A COUCHES ET SON PROCEDE DE FABRICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.12.2008 DE 102008060302**

(43) Veröffentlichungstag der Anmeldung:
**05.10.2011 Patentblatt 2011/40**

(73) Patentinhaber: **Süd-Chemie IP GmbH & Co. KG
80333 München (DE)**

(72) Erfinder:
• **ZORJANOVIC, Jovica
85368 Moosburg (DE)**
• **SOHLING, Ulrich
85356 Freising (DE)**
• **RUF, Friedrich
84184 Tiefenbach-Ast (DE)**
• **ENGELHARDT, Thomas
85354 Freising (DE)**

(74) Vertreter: **Silber, Anton
Clariant Produkte (Deutschland) GmbH
Patent & License Management
Lenbachplatz 6
80333 München (DE)**

(56) Entgegenhaltungen:
EP-A1- 0 485 124    WO-A1-97/33040
US-A- 5 266 538    US-A- 5 391 228

**EP 2 370 630 B1**

**Beschreibung**

Die Erfindung betrifft ein Verfahren zur Herstellung einer Schichtsilikatzusammensetzung, sowie die Verwendung einer Schichtsilikatzusammensetzung, wie sie mit dem Verfahren hergestellt wird, zur Herstellung von Papier, Pappe, Karton oder von papierhaltigen Verbundwerkstoffen.

Bei der Papierherstellung geht man von einer wässrigen Suspension aus, die ungefähr 1 Gew.-% Zellstofffasern enthält. Daneben enthält die Suspension beispielsweise noch Füllstoffe, meist Calciumcarbonat, in einem Anteil von bis 30 Gew.-%, bezogen auf den Faseranteil. Zur Papierherstellung werden heute duale Retentions- und Drainagesysteme verwendet. Dabei wird zur Fasersuspension ein kationisches Polymer zugegeben, um die Fasern in Form von Flocken aus der Suspension auszufällen. Ferner wird ein Bentonit zugegeben, welcher eine Verbindung der Flocken und nach dem Abtrennen des Wassers die Ausbildung einer stabilen Papierstruktur bewirkt. Dabei ist gewünscht, dass der Bentonit in möglichst stark delaminierter Form vorliegt, sodass eine hohe Anzahl von Partikeln zum Verbinden der Flocken zur Verfügung steht. Die Mischung wird dann auf ein Sieb gegeben, sodass das Wasser abläuft und sich eine stabile Papierschicht ausbildet. Die Verwendung von Schichtsilikaten in dualen Retentions- und Drainagesystemen bei der Papierherstellung ist bereits seit mehr als zwei Jahrzehnten bekannt. Duale Retentions- und Drainagesysteme werden häufig auch als Mikropartikelsysteme bezeichnet und können beispielsweise eine Kombination aus einem oder mehreren kationischen Polymeren und anionisch geladenen Mikropartikeln, wie beispielsweise anionisch geladenen organischen Komponenten, Silicapartikeln oder quellfähigen Tonmaterialien, umfassen. Ein handelsübliches, am Markt erhältliches duales Retentions- und Drainagesystem ist beispielsweise das Hydrocol® OT System.

Eine ausführliche Darstellung von dualen Retentions- und Drainagesystemen findet sich beispielsweise in der Patentschrift EP 0 235 893, wobei derartige Systeme insbesondere auf einer Verwendung von kationischem Polymermaterial und Schichtsilikatmaterial als anionischen Mikropartikeln beruhen können.

Zur Verbesserung der Retentions- und Drainageergebnisse können die in den dualen Retentions- und Drainagesystemen eingesetzten Schichtsilikate einer aktivierenden Vorbehandlung unterzogen werden, sodass eine weitgehende Delaminierung des Schichtsilikats beim Kontakt mit Wasser erreicht wird. Erdalkalibentonite weisen eine Gefügestruktur und hieraus resultierende chemische und physikalische Eigenschaften auf, die sich stark von der Gefügestruktur und den hieraus resultierenden chemischen und physikalischen Eigenschaften von Schichtsilikaten mit einem hohen Gehalt an einwertigen Kationen unterscheiden. Insbesondere weisen Erdalkalibentonite eine bei weitem geringere Quellfähigkeit auf. Eine hohe Quellfähigkeit der Schichtsilikate ist jedoch erwünscht, da die Schichtsilikate für die Verwendung zur Papierherstellung in delaminierter Form vorliegen sollen.

Zur Herstellung hoch quellfähiger Schichtsilikate geht man üblicherweise von Schichtsilikaten aus, bei welchen die austauschbaren Kationen zu einem hohen Anteil von Erdalkalimetallionen, insbesondere Calcium- und Magnesiumionen gebildet werden. Typische Schichtsilikate sind beispielsweise Calcium- oder Magnesiumbentonite. Die Schichtsilikate werden mit einem Aktivierungsreagenz umgesetzt, welches einwertige Ionen enthält, meist Natrium- oder Ammoniumionen. Übliche Aktivierungsreagenzien sind beispielsweise Alkalicarbonate, insbesondere Natriumcarbonat und Natriumhydrogencarbonat. Das Schichtsilikat wird ggf. befeuchtet, um seine Knetbarkeit zu verbessern und dann mit dem Aktivierungsreagens behandelt. Dazu kann das Schichtsilikat beispielsweise mit einer Lösung des Aktivierungsreagens besprüht oder mit dem pulverförmigen Aktivierungsreagenz vermischt werden. Die Mischung wird dann geknetet oder extrudiert, sodass die Mischung hohen Scherkräften ausgesetzt und eine innige Vermischung von Schichtsilikat und Aktivierungsreagenz erreicht wird. Die im Schichtsilikat enthaltenen mehrwertigen Kationen werden dabei durch die einwertigen Kationen des Aktivierungsreagenz ausgetauscht. Anschließend kann die Mischung ggf. noch getrocknet und gemahlen werden. Durch die Aktivierung erhöht sich die Quellfähigkeit des Schichtsilikats beträchtlich.

In der WO 97/33040 A1 wird ein Verfahren zur Aktivierung von Erdalkalibentoniten beschrieben. Dabei wird der Erdalkalibentonit mit einer wässrigen Lösung eines Alkalimetall- oder Ammoniumsalzes eines Maskierungsmittels behandelt, wobei das Maskierungsmittel ausgewählt ist aus Phosphonat, Hydroxycarbonsäuren, Aminocarbonsäuren und Di- oder Tricarbonsäuren. Bevorzugt wird als Maskierungsmittel Natriumcitrat verwendet. Durch das Maskierungsmittel werden Erdalkaliionen, die durch die Natriumionen des Maskierungsmittels ausgetauscht werden, maskiert. Dadurch fallen diese nicht aus sondern verbleiben in Lösung. Es wird damit die Ausbildung von Ablagerungen verhindert, wie sie beispielsweise bei der Aktivierung von Bentonit mit Natriumcarbonat durch die Ausfällung von Calciumcarbonat entstehen. Als weiterer Vorteil weist der behandelte Bentonit einen nahezu neutralen pH-Wert auf. Dies ist bei der Verwendung in der Papierherstellung vorteilhaft, da der mit Natriumcarbonat behandelte Bentonit den pH-Wert der Fasersuspension stark in den alkalischen Bereich verschieben kann.

In der EP 0 485 124 A1 wird die Herstellung einer Bentonitsuspension mit hohem Feststoffgehalt beschrieben. Die Quellbarkeit des Bentonits wird erniedrigt, indem in der Suspension eine hohe Konzentration eines anorganischen Elektrolyts, insbesondere Natriumchlorid, eingestellt wird. Wird die Suspension mit Wasser verdünnt, erniedrigt sich auch die Konzentration des Elektrolyts, sodass der Bentonit nun quillt.

In der US 5,266,538 wird eine Bentonitsuspension beschrieben, welche einen möglichst hohen Feststoffgehalt aufweisen soll. Dies wird erreicht, indem die Elektrolytkonzentration in der Suspension stark erhöht wird.

Eine Verwendung von aktivierten Schichtsilikaten ist jedoch nicht nur auf eine Herstellung von Papier, Karton, Pappen und papierhaltigen Verbundwerkstoffen beschränkt, sondern kann auch auf zahlreichen anderen technischen Gebieten zum Einsatz kommen, beispielsweise bei Entwässerungsverfahren oder bei Verfahren zur Abtrennung von Feststoffen aus Fluiden.

Bei aktivierten Schichtsilikatmaterialien des Stands der Technik ist oftmals von Nachteil, dass diese zum Erzielen guter Retentions- und Drainageergebnisse bei einer Papierherstellung in hohen Mengen zugesetzt werden müssen, wobei dies deutlich zu den kosten des an den Verbraucher bereitgestellten Endprodukts beitragen kann. Zudem kann dies bei einer Verwendung alkalischer Aktivierungssubstanzen zu einem bei zahlreichen Anwendungen unerwünscht hohen pH-Wert des Schichtsilikatmaterials führen.

Aufgabe der Erfindung ist die Bereitstellung von alternativen Schichtsilikatzusammensetzungen, die insbesondere zur Herstellung von Papieren eingesetzt werden können. Die durch dieses Verfahren zugänglichen Schichtsilikatzusammensetzungen sollten bei einer Verwendung in Papierherstellungsverfahren sowohl zu sehr guten Retentions-, als auch zu sehr guten Drainageergebnissen führen und/oder eine Verringerung der eingesetzten Mengen an in Wasser stark alkalisch reagierenden Aktivierungsreagenzien ermöglichen. Insbesondere sollte ein durch ein derartiges Verfahren erhältliches aktiviertes Schichtsilikat in handelsüblichen Retentions- und Drainagesystemen, wie beispielsweise dem Hydrocol® System oder dem Telioform® System eingesetzt werden können. Zudem sollten vorteilhafte Retentions- und Drainageergebnisse bereits bei einem Zusatz einer geringen Menge an Schichtsilikatzusammensetzung auftreten, um auf diese Weise zur Einsparung von Ressourcen beizutragen und eine Bereitstellung preisgünstiger Endprodukte an den Verbraucher zu ermöglichen.

Gelöst wird eine Aufgabe der vorliegenden Erfindung durch ein Verfahren mit den Merkmalen des Patentanspruchs 1. Vorteilhafte Ausführungsformen des Verfahrens sind Gegenstand der abhängigen Ansprüche.

Beim erfindungsgemäßen Verfahren wird von einem Schichtsilikat ausgegangen, das bei Kontakt mit Wasser bereits stark quillt. Dazu weist das Schichtsilikat bereits einen Anteil an einwertigen Kationen auf. Es kann entweder bereits ein natürliches Schichtsilikat verwendet werden, das bereits einen hohen Anteil an austauschbaren einwertigen Kationen aufweist, beispielsweise ein natürlicher Natriumbentonit. Es kann aber auch ein Schichtsilikat verwendet werden, das zunächst zum Austausch von mehrwertigen Kationen beispielsweise mit einem Alkalicarbonat aktiviert wurde. Das Schichtsilikat, das bereits austauschbare einwertige Kationen enthält, wird dann mit einer Behandlungskomponente behandelt, wobei die Behandlungskomponente ein mehrzähniger Komplexbildner für Metalle ist. Die Behandlungskomponente kann dann mehrwertige Kationen komplexieren und so die Ausbildung störender Niederschläge verhindern. Die gemäß dem Verfahren erhaltene Schichtsilikatzusammensetzung delaminiert bei Kontakt mit Wasser in sehr hohem Maß, sodass bei Verwendung der Schichtsilikatzusammensetzung bei der Papierherstellung eine große Menge an Partikeln zur Verfügung steht, um die Papierstruktur zu stabilisieren. Dadurch kann die Menge der zur Papierherstellung eingesetzten Schichtsilikatzusammensetzung gegenüber bisherigen Schichtsilikatzusammensetzungen deutlich reduziert werden, ohne dass Abstriche bei der Papierherstellung oder der Papierqualität in Kauf genommen werden müssen.

Ohne an diese Theorie gebunden sein zu wollen erklären sich die Erfinder die gegenüber der Schichtsilikatzusammensetzung aus der WO 97/33040 verbesserten Eigenschaften durch den folgenden Mechanismus:

Bei dem aus der WO 97/33040 bekannten Verfahren wird der Erdalkalibentonit direkt mit dem Maskierungsmittel behandelt. Die im Maskierungsmittel vorhandenen mehrzähnigen Anionen koordinieren jedoch bevorzugt an die Kanten der Lamellen des Schichtsilikats. Dadurch wird der Austausch der zwischen den Schichten des Schichtsilikats angeordneten Calciumionen jedoch blockiert oder zumindest erschwert, sodass auch nach der Behandlung noch Calciumionen zwischen den Schichten des Schichtsilikats verbleiben, also kein vollständiger Austausch durch einwertige Kationen erfolgt. Dies führt letztlich zu einem schlechteren Quellen des Schichtsilikats beim Kontakt mit Wasser und damit zu einem unvollständigen Delaminieren der einzelnen Schichten des Schichtsilikats.

Beim erfindungsgemäßen Verfahren weist das Schichtsilikat bereits einen Anteil an austauschbaren einwertigen Kationen auf. Das Schichtsilikat quillt daher schon deutlich besser als ein Erdalkalibentonit. Wird dieses bereits voraktivierte Schichtsilikat nun mit dem Behandlungsreagens behandelt, wirkt sich die Koordination der komplexierenden Anionen an die Kanten der Lamellen des Schichtsilikats nicht mehr gravierend aus, sodass ein vollständiger Austausch mehrwertiger Kationen des Schichtsilikats erreicht werden kann. Dadurch quillt das behandelte Schichtsilikat bei Kontakt mit Wasser besser und die Delaminierung erfolgt in größerem Ausmaß als bei einer Schichtsilikatzusammensetzung nach der WO 97/33040.

Erfindungsgemäß wird daher ein Verfahren zur Herstellung einer Schichtsilikatzusammensetzung zur Verfügung gestellt, mit den Schritten:

a. Bereitstellen mindestens eines austauschbare einwertige Kationen enthaltenden Schichtsilikats;

b. Behandeln des mindestens einen austauschbare einwertige Kationen enthaltenden Schichtsilikats mit mindestens einer Behandlungskomponente, wobei die Behandlungskomponente ein Komplexbildner für Metalle ist.

Der im Weiteren verwendete Begriff "einwertige Kationen enthaltendes Schichtsilikat" weist die gleiche Bedeutung auf wie der Begriff "austauschbare einwertige Kationen enthaltendes Schichtsilikat".

Als Schichtsilikate können an sich alle Schichtsilikate eingesetzt werden. In Schichtsilicaten, auch Blatt- oder Phyllosilicate genannt, sind die $SiO_4$-Tetraeder in Schichten mit der Zusammentsetzung miteinander vernetzt. Diese Tetraederschichten wechsellagern mit Oktaederschichten, in denen ein Kation, vor allem Aluminium und Magnesium, oktaedrisch von Hydroxid bzw. Sauerstoff umgeben ist. Dabei kann eine $Si_2O_5$-Tetraederschicht sowohl mit einer Oktaederschicht (Zweischicht-Phyllosilicate) als auch mit zwei Oktaederschichten (Dreischicht-Phyllosilicate) verbunden sein.

Zu den Zweischicht-Mineralen zählen beispielsweise Kaolinit und Serpentin, zu den Dreischicht-Mineralen vor allem Montmorillonit. Bevorzugt werden als Schichtsilikate Tonminerale eingesetzt. Diese können einfach und günstig aus natürlichen Quellen gewonnen werden. Insbesondere bevorzugt wird Bentonit als Schichtsilikat im erfindungsgemäßen Verfahren eingesetzt.

Bei dem mindestens einen einwertige Kationen enthaltenden Schichtsilikat kann es sich sowohl um ein natürliches Schichtsilikat, das heißt um ein Schichtsilikat, das durch einen Abbau von natürlichen Vorkommen gewonnen werden kann, als auch um ein synthetisch hergestelltes Schichtsilikat handeln, insbesondere um ein Schichtsilikat, das ausgehend von anderen silikatischen Materialien, insbesondere Schichtsilikaten hergestellt wird.

Vorzugsweise umfassen die einwertigen Kationen des mindestens einen einwertige Kationen enthaltenden Schichtsilikats einwertige Kationen ausgewählt aus der Gruppe, bestehend aus Ammoniumionen, Natriumionen, Kaliumionen und Lithiumionen und deren Gemischen, insbesondere ausgewählt aus der Gruppe, bestehend aus Lithiumionen, Natriumionen und Kaliumionen und deren Gemischen. Besonders bevorzugt werden die einwertigen Kationen durch Natriumionen gebildet.

Bevorzugt handelt es sich bei dem mindestens einen einwertige Kationen enthaltenden Schichtsilikat um ein smektitisches Schichtsilicat oder ein Gemisch von smektitischen Schichtsilikaten. Sehr vorteilhafte Materialeigenschaften können insbesondere erhalten werden, wenn das Schichtsilikat ausgewählt ist aus der Gruppe, bestehend aus Bentonit, Montmorillonit, Hectorit, Saponit, Stevensit, Beidelit, Nontronit und deren Gemischen. Vorzugsweise handelt es sich bei dem Schichtsilikat um ein nicht kalziniertes Schichtsilikat, das heißt um ein Schichtsilikat, das nach seiner Darstellung oder Gewinnung beispielsweise nicht über 500°C, vorzugsweise nicht über 200°C, insbesondere nicht über 115°C erhitzt wurde. Silikate, sowie ihr Aufbau und ihre Zusammensetzung werden zudem beispielsweise in dem Lehrbuch "Holleman-Wiberg, Lehrbuch der Anorganischen Chemie" von N. Wiberg, 91.-100. Aufl., Walter de Gruyter & Co., 1985, ISBN 3-11-007511-3, S. 768 bis 779 erläutert.

Besonders bevorzugt ist, wenn das mindestens eine Schichtsilikat Bentonit umfasst oder aus diesem besteht. Bentonite weisen als Hauptbestandteil Montmorillonit auf, wobei sich dieser durch ein besonders vorteilhaftes chemischphysikalisches Verhalten, insbesondere durch ein besonders vorteilhaftes Quellvermögen, auszeichnet. Montmorillonit ist ein Dreischichtmineral, aufgebaut aus zwei $SiO_4$-Tetraederschichten zwischen denen sich eine Oktaederschicht befindet, die überwiegend Aluminiumionen enthält. Das Verhalten von Bentoniten in wässrigen Systemen wird durch die permanente negative Schichtladung geprägt, die durch isomorphe Substitution und Fehlstellen in der Silikatschicht entstehen und variable Ladung an den Rändern der Bentonitkristalle beeinflusst. Zwischen den Schichten befinden sich Kationen, die austauschfähig sind.

Der Begriff "einwertige Kationen enthaltendes Schichtsilikat" umfasst im Rahmen der vorliegenden Anmeldung Schichtsilikate, die (insbesondere als austauschbare Kationen) überwiegend einwertige Kationen enthalten, wobei die Schichtsilikate bevorzugt einen Anteil an einwertigen Kationen aufweisen, der größer als der Anteil der zwei- und höherwertigen Kationen ist. Vorzugsweise kann der Anteil der einwertigen Kationen, mindestens das 1,1-fache, vorzugsweise mindestens das 3-fache, bevorzugt mindestens das 5-fache, weiter bevorzugt mindestens das 8-fache des Anteils der zwei- und höherwertigen, insbesondere der zweiwertigen Kationen betragen. Die Angaben beziehen sich jeweils auf Äquivalente.

Ein geeignetes Verfahren zur Bestimmung des Gehalts an austauschbaren einwertigen bzw. zwei- und höherwertigen Kationen, an Alkalikationen, etc. findet sich detailliert im nachstehenden Methodenteil beschrieben und kann insbesondere durch Kationenaustausch mit einer wässrigen Ammoniumchloridlösung ermittelt werden.

Darüber hinaus kann nach einer bevorzugten Ausführungsform das einwertige Kationen enthaltende Schichtsilikat, insbesondere als austauschbare Kationen, einen Gesamtanteil an Natrium-, Lithium- , Kalium- und Ammoniumionen aufweisen, der größer als der Gesamtanteil der Magnesium- und Calciumionen ist, wobei im Rahmen der vorliegenden Anmeldung der Begriff "Alkali- und/oder Ammonium-Schichtsilikate" insbesondere derartige Verbindungen umfasst. Bevorzugt kann der Gesamtanteil der Natrium-, Lithium-, Kalium- und Ammoniumionen, mindestens das 1,1-fache, vorzugsweise mindestens das 3-fache, bevorzugt mindestens das 5-fache, weiter bevorzugt mindestens das 8-fache des Gesamtanteils der Magnesium- und Calciumionen betragen.

Weiter kann nach einer bevorzugten Ausführungsform das einwertige Kationen enthaltende Schichtsilikat, insbesondere als austauschbare Kationen, einen Gesamtanteil an Natrium-, Lithium- und Kaliumionen aufweisen, der größer als der Gesamtanteil der Magnesium- und Calciumionen ist, wobei im Rahmen der vorliegenden Anmeldung der Begriff "Alkali-Schichtsilikate" insbesondere derartige Verbindungen umfasst. Bevorzugt kann der Gesamtanteil der Natrium-, Lithium- und Kaliumionen, mindestens das 1,1-fache, vorzugsweise mindestens das 3-fache, bevorzugt mindestens das 5-fache, weiter bevorzugt mindestens das 8-fache des Gesamtanteils der Magnesium- und Calciumionen betragen.

Vorzugsweise weist das einwertige Kationen enthaltende Schichtsilikat einen Anteil von einwertigen Kationen an der Gesamtkationenaustauschkapazität (nachfolgend auch als CEC abgekürzt) von mindestens 50 %, vorzugsweise mindestens 60%, insbesondere mindestens 70%, weiter bevorzugt mindestens 80%, weiter bevorzugt mindestens 90% auf. Besonders gute Ergebnisse bei der Herstellung von Papier, Pappe, Karton und papierhaltigen Verbundwerkstoffen können erhalten werden, wenn das einwertige Kationen enthaltende Schichtsilikat einen Gesamtanteil von Alkali-, insbesondere Natrium-, Kalium- und Lithium-, sowie Ammoniumionen, vorzugsweise von Natrium-, Kalium-, Lithiumionen an der Gesamtkationenaustauschkapazität (nachfolgend auch als CEC abgekürzt) von mindestens 50 %, vorzugsweise mindestens 60%, insbesondere mindestens 70%, weiter bevorzugt mindestens 80%, weiter bevorzugt mindestens 90% aufweist.

Das einwertige Kationen enthaltende Schichtsilikat wird bereitgestellt und dann mit mindestens einer Behandlungskomponente behandelt, wobei die Behandlungskomponente ein Komplexbildner für Metalle ist.

Das Schichtsilikat kann beispielsweise in Form einer Suspension vorgelegt werden. Bevorzugt wird das Schichtsilikat in einer Form bereitgestellt, in welcher es gut knetbar ist. Dazu kann das Schichtsilikat gemahlen werden. Es kann dann in feuchter Form vorgelegt werden. Der Wassergehalt des Schichtsilikats wird bevorzugt im Bereich von 10 bis 40 Gew.-%, weiter bevorzugt 15 bis 30 Gew.-% gewählt. Ggf. kann das Schichtsilikat geknetet werden, um eine homogene und geschmeidige Masse zu erhalten.

Zum Schichtsilikat wird dann die mindestens eine Behandlungskomponente gegeben.

Die mindestens eine Behandlungskomponente kann in jeder geeigneten, dem Fachmann bekannten Form eingesetzt werden, beispielsweise in Form einer Suspension, Lösung, Aufschlämmung, oder auch in trockener Form, beispielsweise in Form von Partikeln, Pulvern, usw.

Die Behandlung des mindestens einen einwertige Kationen enthaltenden Schichtsilikats mit der mindestens einen Behandlungskomponente kann in Gegenwart von Wasser erfolgen. Beispielsweise kann das Behandeln des mindestens einen einwertige Kationen enthaltenden Schichtsilikats mit der mindestens einen Behandlungskomponente als Slurry (Aufschlämmung) erfolgen. Vorzugsweise erfolgt die Behandlung des mindestens einen einwertige Kationen enthaltenden Schichtsilikats jedoch in Gegenwart niedriger oder verfahrenstechnisch unvermeidbarer Wassermengen. Beispielsweise kann ein bei dieser Behandlung gebildetes Gemisch des mindestens einen einwertige Kationen enthaltenden Schichtsilikats und der mindestens einen Behandlungskomponente einen Wassergehalt von weniger als 200 Gew.-%, vorzugsweise von weniger als 80 Gew.-%, weiter vorzugsweise von weniger als 40 Gew.-% bezogen auf das Gesamtgewicht an in diesem Gemisch enthaltenen Schichtsilikat nach Trocknung bei 130°C bis zur Gewichtskonstanz aufweisen.

Bei entsprechender Reaktionsführung kann das Gemisch jedoch auch einen geringeren Wassergehalt aufweisen. So weist das Gemisch gemäß einer Ausführungsform einen Wassergehalt von weniger als 20 Gew.-%, gemäß einer weiteren Ausführungsform von weniger als 18 Gew.-% auf.

Während der Behandlung des mindestens einen einwertige Kationen enthaltenden Schichtsilikats mit der mindestens einen Behandlungskomponente ist bevorzugt, dass das Gemisch gut knetbar ist bzw. gut extrudiert werden kann. Gemäß einer Ausführungsform weist das Gemisch daher einen Wassergehalt von zumindest 10 Gew.-%, gemäß einer weiteren Ausführungsform von zumindest 15 Gew.-% auf.

Der Schritt des Behandelns kann insbesondere ein intensives Vermengen das mindestens einen einwertige Kationen enthaltenden Schichtsilikat und der mindestens einen Behandlungskomponente umfassen. Vorzugsweise kann ein Vermengen durch Rühren, Kneten und/oder Extrudieren erfolgen.

Die Dauer der Behandlung des mindestens einen einwertige Kationen enthaltenden Schichtsilikats, insbesondere des Vermengens, kann in Abhängigkeit von den verwendeten Ausgangsmaterialien gewählt werden. Vorzugsweise beträgt die Dauer der Behandlung 0,5 bis 20 Minuten, bevorzugt 1 bis 11 Minuten, insbesondere 2 bis 6 Minuten.

Zudem kann der Schritt der Behandlung des mindestens einen einwertige Kationen enthaltenden Schichtsilikats bei einer Temperatur von beispielsweise unter 90°C, bevorzugt bei einer Temperatur von unter 70°C, insbesondere bei einer Temperatur von unter 45°C erfolgen.

Neben der zumindest einen Behandlungskomponente können während der Behandlung auch noch weitere Komponenten zum mindestens einen einwertige Kationen enthaltenden Schichtsilikat gegeben werden. Diese weiteren Komponenten können in Abhängigkeit von der jeweils angestrebten Anwendung der Schichtsilikatzusammensetzung und zu berücksichtigender Verfahrensbedingungen ausgewählt werden. Insbesondere können neben der Behandlungskomponente beispielsweise organische und/oder anorganische Lösungsmittel, insbesondere Wasser, anorganische und/oder organische Säuren und deren Salze, insbesondere deren Natriumsalze, anorganische und/oder organische Basen und deren Salze, Tenside, Flockungsmittel, Farbstoffe etc. zum mindestens einen einwertige Kationen enthaltenden Schichtsilikat gegeben werden.

Als Behandlungskomponente wird ein Komplexbildner für Metalle eingesetzt. Durch den Komplexbildner werden mehrwertige Metallionen, insbesondere Calcium- und Magnesiumionen bevorzugt gebunden. Dadurch wird zum einen verhindert, dass die mehrwertigen Kationen schwerlösliche Niederschläge bilden. Zum anderen werden die mehrwertigen Metallionen maskiert, sodass sie nicht mehr bei der Delaminierung des Schichtsilikats stören. Die Komplexbildner werden bevorzugt so ausgewählt, dass mehrwertige Kationen gegenüber einwertigen Kationen bevorzugt gebunden werden. Als Komplexbildner werden bevorzugt anionische Verbindungen ausgewählt, wobei mehrwertige Anionen weiter bevorzugt sind. Bevorzugt tragen die als Behandlungskomponente eingesetzten mehrwertigen Anionen zumindest zwei negative Ladungen. Gemäß einer Ausführungsform sind mehrzähnige Komplexbildner bevorzugt. Ein beispielhafter mehrzähniger Komplexbildner ist Zitronensäure.

Nach der Behandlung kann die Schichtsilikatzusammensetzung noch getrocknet und ggf. vermahlen werden.

Gemäß einer besonders bevorzugten Ausführungsform wird das einwertige Kationen enthaltende Schichtsilikat erhalten, indem ein Vorläufer-Schichtsilikat mit einem Aktivierungsreagenz behandelt wird, wobei das Aktivierungsreagenz ein Salz eines einwertigen Kations ist. Als Vorläufer-Schichtsilikat wird ein mehrwertige Kationen enthaltendes Schichtsilikat eingesetzt. Bei dieser Ausführungsform wird von einem Vorläufer-Schichtsilikat ausgegangen, das einen hohen Anteil an mehrwertigen Kationen aufweist. Gemäß einer Ausführungsform beträgt der Anteil der mehrwertigen Kationen an der Gesamtkationenaustauschkapazität des Vorläufer-Schichtsilikats zumindest 50 %, gemäß einer weiteren Ausführungsform zumindest 70 %, gemäß einer weiteren Ausführungsform zumindest 90 % und gemäß noch einer weiteren Ausführungsform zumindest 95 %.

Ein gut verfügbares mehrwertige Kationen enthaltendes Schichtsilikat ist beispielsweise Calciumbentonit. Ohne an diese Theorie gebunden sein zu wollen gehen die Erfinder von der Vorstellung aus, dass die mehrwertigen Kationen zunächst durch einwertige Kationen ausgetauscht werden, die vom Aktivierungsreagenz zur Verfügung gestellt werden. Dadurch verbessert sich die Quellfähigkeit des Schichtsilikats. Wird das aktivierte Schichtsilikat nun mit der Behandlungskomponente behandelt, wird der weitere Austausch der Kationen nicht durch die Behandlungskomponente behindert, die sich als Komplexbildner an Kanten der Lamellen des Schichtsilikats koordinieren kann. Ferner werden mehrwertige Kationen, die aus dem Schichtsilikat durch Austausch gegen einwertige Kationen freigesetzt werden, durch die Behandlungskomponente maskiert.

Das Herstellen des mindestens einen einwertige Kationen enthaltenden Schichtsilikats kann ausgehend von einem Herstellungsgemisch erfolgen, das mindestens ein Vorläufer-Schichtsilikat sowie das Aktivierungsreagenz umfasst.

Als Vorläufer-Schichtsilikat wird dabei ein mehrwertige Kationen enthaltendes Schichtsilikat eingesetzt, wobei die mehrwertigen Kationen vorzugsweise durch zweiwertige Kationen, insbesondere bevorzugt durch Calcium- und/oder Magnesiumionen gebildet werden.

Dieses mehrwertige Kationen enthaltende Schichtsilikat wird dann mit einem Aktivierungsreagenz umgesetzt. Als Aktivierungsreagenz werden eine oder mehrere einwertige Kationen enthaltenden Komponenten eingesetzt, die in Form von Salzen eingesetzt werden. Salze einwertiger Kationen sind im Allgemeinen gut wasserlöslich, sodass ein leichter Austausch der im Schichtsilikat vorhandenen zweiwertigen Kationen erfolgt, da die Schichtsilikate im Allgemeinen Wasser enthalten.

Als Salze einwertiger Kationen werden bevorzugt Carbonate oder Hydrogencarbonate eingesetzt.

Das Herstellungsgemisch umfasst als Vorläufer-Schichtsilikat ein oder mehrere Schichtsilikate. Die Schichtsilikate können einen relativ geringen Wassergehalt aufweisen, sodass sie beispielsweise gut knetbar sind oder extrudiert werden können. Der Wassergehalt wird dabei bevorzugt im Bereich von 10 bis 40 Gew.-%, weiter bevorzugt im Bereich von 15 bis 30 Gew.-% gewählt. Die Schichtsilikate können aber auch in Form eines wässrigen Fluids vorliegen, das ein oder mehrere Schichtsilikate umfasst, beispielsweise in Form einer wässrigen Aufschlämmung. Eine Aufschlämmung kann das zumindest eine Vorläufer-Schichtsilikat in einem Anteil von 5 bis 30 Gew.-%, gemäß einer weiteren Ausführungsform in einem Anteil von 10 bis 20 Gew.-% enthalten.

Vorzugsweise umfasst das Herstellungsgemisch als Vorläufer-Schichtsilikat ein smektitisches Schichtsilicat oder ein Gemisch von smektitischen Schichtsilikaten. Sehr vorteilhafte Materialeigenschaften können insbesondere erhalten werden, wenn als Vorläufer-Schichtsilikat ein Schichtsilikat eingesetzt wird, das ausgewählt ist aus der Gruppe, bestehend aus Bentonit, Montmorillonit, Hectorit, Saponit, Stevensit, Beidelit, Nontronit und deren Gemischen. Vorzugsweise handelt es sich bei dem Vorläufer-Schichtsilikat um ein nicht kalziniertes Schichtsilikat, das heißt um ein Schichtsilikat, das nach seiner Darstellung oder Gewinnung beispielsweise nicht über 500°C, vorzugsweise nicht über 200°C, insbesondere nicht über 115°C erhitzt wurde.

Schichtsilikatzusammensetzungen mit sehr guten Materialeigenschaften, insbesondere zur Papierherstellung, können insbesondere erhalten werden, wenn das mindestens eine Vorläufer-Schichtsilikat mit Alkalicarbonat, Ammoniumcarbonat, Ammoniumhydrogencarbonat und/oder Alkalihydrogencarbonat, vorzugsweise mit Natriumcarbonat (insbesondere Soda) und/oder Natriumhydrogencarbonat, als Aktivierungsreagenz behandelt wird.

Eine Behandlung des mindestens einen Vorläufer-Schichtsilikats mit dem ein oder mehrere einwertige Kationen enthaltenden Aktivierungsreagenz kann beispielsweise erfolgen, in dem das Aktivierungsreagenz in fester Form, beispielsweise in Form eines Pulvers, oder in Form eines Fluids, insbesondere einer Lösung, dem Vorläufer-Schichtsilikat zugesetzt wird und mit diesem, beispielsweise durch Kneten und/oder Extrudieren, vermengt wird.

Wenn das Herstellungsgemisch in Form eines Fluids vorliegt, insbesondere in Form einer Aufschlämmung, kann ein Vermengen beispielsweise unter Rühren oder Umwälzen erfolgen.

Vorzugsweise erfolgt die Herstellung des mindestens einen einwertige Kationen enthaltenden Schichtsilikats in Gegenwart niedriger oder verfahrenstechnisch unvermeidlicher Wassermengen. Beispielsweise kann das Herstellungsgemisch lediglich einen Wassergehalt von weniger als 200 Gew.-%, vorzugsweise von weniger als 80 Gew.-%, weiter vorzugsweise von weniger als 40 Gew.-% aufweisen, bezogen auf das Gesamtgewicht an in diesem Herstellungsgemisch enthaltenen Schichtsilikat nach Trocknung bei 130 °C bis zur Gewichtskonstanz.

Die Aktivierung des Vorläufer-Schichtsilikats kann auch erfolgen, wenn dies einen niedrigeren Wassergehalt aufweist. Gemäß einer Ausführungsform weist das Vorläufer-Schichtsilikat einen Wassergehalt von weniger als 20 Gew.-%, gemäß einer weiteren Ausführungsform einen Wassergehalt von weniger als 18 Gew.-% auf. Wird ein Vorläufer-Schichtsilikat mit einem relativ geringen Wassergehalt verwendet, wird das Aktivierungsreagenz bevorzugt in Form einer wässrigen Lösung aufgebracht.

Um eine gute Knetbarkeit des Herstellungsgemisches zu erreichen, weist das Herstellungsgemisch gemäß einer Ausführungsform einen Wassergehalt von zumindest 10 Gew.-%, gemäß einer weiteren Ausführungsform von zumindest 15 Gew.-% auf.

Die Dauer der Behandlung des mindestens einen Vorläufer-Schichtsilikats mit dem ein oder mehrere einwertige Kationen enthaltenden Aktivierungsreagenz zur Herstellung des mindestens einen einwertige Kationen enthaltenden Schichtsilikats kann in Abhängigkeit von dem zu erzielenden Anteil an einwertigen Kationen an der Gesamtkationenaustauschkapazität und dem verwendeten Vorläufer-Schichtsilikat gewählt werden. Die Dauer des Vermengens, beispielsweise durch Kneten oder Extrudieren, des Herstellungsgemischs kann zwischen 1 und 15 Minuten, vorzugsweise zwischen 2 und 4 Minuten, betragen. Vorzugsweise erfolgt die Herstellung des zumindest einen einwertige Kationen enthaltenden Schichtsilikats bei einer Temperatur unter 90°C, bevorzugt bei einer Temperatur von unter 70°C, insbesondere bei einer Temperatur von unter 45°C. Gemäß einer Ausführungsform erfolgt die Herstellung des zumindest einen einwertige Kationen enthaltenden Schichtsilikats bei einer Temperatur von zumindest 10 °C.

Sehr gute Ergebnisse können beispielsweise erhalten werden, wenn bezogen auf das Gesamtgewicht an dem mindestens einen Vorläufer-Schichtsilikat das Gesamtgewicht an Aktivierungsreagenz mindestens 1 Gew.-%, vorzugsweise 1 bis 5 Gew.-%, bevorzugt 1,5 bis 4,5 Gew.-% beträgt.

Das Aktivierungsreagenz wird vorzugsweise ausgewählt aus der Gruppe von Alkalicarbonaten, Ammoniumcarbonat, Ammoniumhydrogencarbonat und Alkalihydrogencarbonaten. Diese Salze können einzeln oder auch im Gemisch eingesetzt werden.

Als Aktivierungsreagenz wird vorzugsweise Natriumcarbonat ($Na_2CO_3$) oder Natriumhydrogencarbonat ($NaHCO_3$) eingesetzt.

Das Aktivierungsreagenz und die Behandlungskomponente können gleichzeitig oder auch nacheinander zum Vorläufer-Schichtsilikat gegeben werden.

Die Behandlung des mindesten einen einwertige Kationen enthaltenden Schichtsilikats mit der mindestens einen Behandlungskomponente kann gemäß einer ersten Ausführungsform während eines Zeitabschnitts oder der vollständigen Dauer des Schritts der Herstellung des einwertige Kationen enthaltenden Schichtsilikats erfolgen, also gemeinsam mit der Behandlung des Vorläufer-Schichtsilikats mit dem Aktivierungsreagenz.

Gemäß einer zweiten Ausführungsform wird das Vorläufer-Schichtsilikat zunächst mit dem Aktivierungsreagenz und anschließend mit der Behandlungskomponente behandelt.

Schichtsilikatzusammensetzungen, die bei der Papierherstellung eine besonders hohe Retention und Drainage ermöglichen, können insbesondere erhalten werden, wenn zunächst ein einwertige Kationen enthaltendes Schichtsilikat hergestellt wird, indem ein Vorläufer-Schichtsilikat mit einem Aktivierungsreagenz behandelt wird. Das dabei erhaltene Herstellungsgemisch, welches das einwertige Kationen enthaltende Schichtsilikat enthält, wird in einem zeitlich nachfolgenden Schritt mit der mindestens einen Behandlungskomponente behandelt. Ohne dass die Erfindung auf die Richtigkeit der nachstehenden Annahme beschränkt wäre, wird angenommen, dass diese vorteilhaften Materialeigenschaften dadurch erzielt werden, dass von einem Schichtsilikat ausgegangen wird, das durch einen hohen Gehalt an einwertigen Kationen, insbesondere an Natriumionen, einen hohen Gehalt an delaminierten Schichtsilikatplättchen bereitstellen kann.

Vorzugsweise erfolgt der Beginn der Behandlung des Herstellungsgemischs mit der mindestens einen Behandlungskomponente mindestens 30 Sekunden, bevorzugt mindestens 1 Minute, weiter insbesondere mindestens 3 Minuten nach der Zugabe des Aktivierungsreagenz zu dem mindestens einen Vorläufer-Schichtsilikat.

Das im erfindungsgemäßen Verfahren eingesetzte mindestens eine einwertige Kationen enthaltende Schichtsilikat weist bevorzugt einen hohen Anteil an einwertigen Kationen auf, sodass es bei Kontakt mit Wasser gut quillt.

Gemäß einer Ausführungsform weist das einwertige Kationen enthaltende Schichtsilikat einen Anteil von einwertigen Kationen an der Gesamtkationenaustauschkapazität von mindestens 50 %, vorzugsweise mindestens 60%, insbesondere mindestens 70%, weiter bevorzugt mindestens 80%, weiter bevorzugt mindestens 90% auf. Insbesondere kann das mindestens eine einwertige Kationen enthaltende Schichtsilikat einen Anteil von Natriumionen an der Gesamtkationenaustauschkapazität von vorzugsweise mindestens 35%, weiter vorzugsweise mindestens 55%, insbesondere mindestens 70%, bevorzugt mindestens 80%, weiter bevorzugt mindestens 90% aufweisen.

Ein Verfahren zur Bestimmung der Gesamtkationenaustauschkapazität ist bei den Beispielen detailliert erläutert.

Als Behandlungskomponente wird im erfindungsgemäßen Verfahren ein Komplexbildner für Metalle eingesetzt. Dieser Komplexbildner hat auch die Aufgabe, mehrwertige Kationen, insbesondere Calcium- und Magnesiumionen, die aus dem Schichtsilikat freigesetzt werden, zu maskieren. Es ist daher vorteilhaft, wenn während des erfindungsgemäßen Verfahrens keine zusätzlichen mehrwertigen Kationen zugesetzt werden.

Gemäß einer Ausführungsform ist vorgesehen, dass die Behandlungskomponente ein Salz eines einwertigen Kations ist. Bevorzugte Kationen sind die Kationen der Alkalimetalle sowie das Ammoniumion, wobei das Natriumion besonders bevorzugt ist.

Als Behandlungskomponente werden Komplexbildner für Metalle eingesetzt. Gemäß einer Ausführungsform ist vorgesehen, dass die Behandlungskomponente ausgewählt ist aus der Gruppe bestehend aus Phosphonaten, Hydroxycarbonsäuren, Aminocarbonsäuren, Polycarbonsäuren, Iminodibernsteinsäuresalzen, Polysuccinimid, Polysuccinimid-Teilhydrolysaten, Polyasparaginsäure und deren Gemischen.

Die Behandlungskomponente liegt dabei bevorzugt in Form eines Salzes, insbesondere in Form ihres Natriumsalzes vor.

Gemäß einer bevorzugten Ausführungsform werden als Behandlungskomponente Phosphonate eingesetzt.

Während der zahlreichen Versuche, die zu der vorliegenden Erfindung führten stellten die Erfinder überraschenderweise fest, dass ein Verfahren, das in Kombination auf einem Einsatz eines einwertige Kationen enthaltenden Schichtsilikats, das vorzugsweise einen hohen Gehalt an einwertigen Kationen, insbesondere einen hohen Alkali- und/oder Ammoniumkationengehalt, weiter insbesondere einen hohen Alkalikationengehalt, das heißt beispielsweise einen Anteil von einwertigen Kationen an der Gesamtkationenaustauschkapazität von mindestens 50 % aufweist, und einer Behandlung durch Phosphonate beruht, zu aktivierten Schichtsilikaten führt, die bei einer Papierherstellung ein äußerst vorteilhaftes Drainage- und Retentionsverhalten bewirken können.

Dieses vorteilhafte Drainage- und Retentionsverhalten kann bereits bei sehr niedrigen Dosierungen an aktiviertem Schichtsilikat erreicht werden, wobei dies zur Ressourcenschonung und zur Bereitstellung preisgünstiger Endprodukte, wie beispielsweise Papier, Karton und Pappe, an den Verbraucher beiträgt. Unter verfahrenstechnischen Gesichtspunkten ist zudem von Vorteil, dass bei dem erfindungsgemäßen Verfahren die Aktivierung in mehreren Stufen ablaufen kann und die durch die Behandlung durch Phosphonate erfolgende Aktivierung zu einem gewünschten Zeitpunkt und in anwendungsspezifisch gewählten Mengen erfolgen kann.

Der Begriff "phosphonatbehandeltes einwertige Kationen enthaltendes Schichtsilikat" beschreibt ein einwertige Kationen enthaltendes Schichtsilikat, vorzugsweise ein Alkali- und/oder Ammoniumionen enthaltendes Schichtsilikat, bevorzugt ein Alkaliionen enthaltendes Schichtsilikat, das mit mindestens einem Phosphonat behandelt wurde. Das Phosphonat wirkt also als Behandlungskomponente.

Eine durch eine Phosphonatbehandlung eines einwertige Kationen enthaltenden Schichtsilikats, wie sie während des erfindungsgemäßen Verfahrens erfolgt, erhältliche Schichtsilikatzusammensetzung weist im Vergleich zu einer lediglich mit Carbonaten oder Hydrogencarbonaten einwertiger Kationen (z.B. Soda), aktivierten Schichtsilikatzusammensetzung eine überraschende und vorteilhafte Partikeldurchmesserverteilung mit deutlich erhöhtem Anteil an kleineren Partikeln mit einem Partikeldurchmesser von weniger als 600 nm auf, was zu den vorteilhaften Retentions- und Drainageverhalten bei der Papierherstellung beitragen kann.

Insbesondere überraschend wird mit dem erfindungsgemäßen Verfahren, bei dem von einem Schichtsilikat ausgegangen wird, das bereits einwertige Kationen enthält, ggf. indem zuvor eine Aktivierung mit einem Aktivierungsreagenz durchgeführt wird, wodurch mehrwertige Kationen des Schichtsilikats durch einwertige Kationen ausgetauscht werden, eine bessere Partikelgrößenverteilung erreicht, also ein höherer Anteil an kleinen Partikeln, als bei einem Verfahren bei dem von einem mehrwertige Kationen enthaltenden Schichtsilikat ausgegangen wird, welches dann direkt mit der Behandlungskomponente, beispielsweise einem Natriumphosphonat, umgesetzt wird.

Überraschenderweise werden beim erfindungsgemäßen Verfahren Schichtsilikatzusammensetzungen erhalten, die einen hohen Anteil an kleinen Partikeln aufweisen, der deutlich über dem Anteil an kleinen Partikeln liegt, die durch eine Aktivierung eines Rohschichtsilikats, beispielsweise eines Rohbentonits, lediglich mit Natriumcarbonat erhalten werden kann. So weist ein lediglich mit Soda, beispielsweise in einer Menge von 2,5 bis 5,5 Gew.-% an Soda, bezogen auf das Gesamtgewicht an Bentonit, aktivierter Bentonit einen Anteil an Partikeln mit einem Partikeldurchmesser von weniger als 600 nm von 10 bis 20 Gew.-% auf, bezogen auf das Gesamtgewicht an Schichtsilikatpartikeln mit einem Partikeldurchmesser von 0,2 bis 100 $\mu$m. Bei einer Phosphonat-aktivierten Schichtsilikatzusammensetzung, wie sie nach dem erfindungsgemäßen Verfahren erhalten werden kann, beträgt der Gehalt an Partikeln mit einem Partikeldurchmesser von weniger als 600 nm hingegen mindestens 40 Gew.-%, vorzugsweise mindestens 45 Gew.-%, bevorzugt mindestens 50 Gew.-%, insbesondere 40 - 60 Gew.-%, bezogen auf das Gesamtgewicht an Schichtsilikatpartikeln mit einem Partikeldurchmesser von 0,2 bis 100 $\mu$m. Ohne dass die vorliegende Erfindung auf die Richtigkeit der nachstehenden Annahme beschränkt wäre, wird angenommen, dass Phosphonate noch im System enthaltene zweiwertige Kationen (wie insbesondere Calcium- und/oder Magnesium-Kationen) komplexieren, so dass die Partikel in geringerem Maße einer Agglomeration bzw. Aggregation unterliegen.

Geht man als Beispiel von einem Verfahren aus, wie es in der WO 97/33040 A1 beschrieben wird, so wird dort der Calciumbentonit direkt mit Natriumphosphonat umgesetzt. Im Gegensatz dazu wird beim erfindungsgemäßen Verfahren der Calciumbentonit zunächst mit beispielsweise Natriumcarbonat aktiviert und dann mit beispielsweise Natriumphosphonat behandelt. Wie bei den Beispielen gezeigt wird, unterscheiden sich die bei den beiden Verfahren erhaltenen Schichtsilikatzusammensetzungen in ihren Eigenschaften.

Ohne dass die vorliegende Erfindung durch die Richtigkeit der nachstehenden Annahme beschränkt werden soll, wird angenommen, dass dieses damit erklärt werden kann, dass bei einem CalciumBentonit die Fähigkeit nach einer Dispergierung in Wasser auf Grund der in Zwischenschichten enthaltenen Calcium-Kationen zu delaminieren nur sehr gering ist und er kaum quellfähig ist. Die überraschend vorteilhaften Wechselwirkungen zwischen Phosphonaten und Schichtsilikatplättchen treten daher bei einer Behandlung eines Ca-Bentonits nicht auf oder werden durch andere negative Wechselwirkungen aufgehoben.

Der Begriff "Phosphonate" umfasst im Rahmen der vorliegenden Anmeldung die Salze von Phosphor(III)säuren, insbesondere Salze von Phosphonsäure ($H_3PO_3$), sowie Salze von Diphosphonsäure ($H_4P_2O_5$). Insbesondere umfasst der Begriff "Phosphonate" auch organische Phosphonate. Als organische Phosphonate können insbesondere alle Phosphonate angesehen werden, die mindestens eine Kohlenstoff-Wasserstoff-Bindung aufweisen.

Besonders gute Schichtsilikatzusammensetzung können erhalten werden, wenn als Phosphonat ein organisches Phosphonat eingesetzt wird, das mindestens zwei, vorzugsweise mindestens drei gleiche oder unterschiedliche phosphorhaltige Reste, die ausgewählt sind, aus der Gruppe bestehend aus $-PO(OH)_2$, $-PO(OH)(O^-) X^+$, $-PO(O^-)_2 X^+ Y^+$, aufweist, wobei diese Reste bevorzugt mit einem Kohlenstoffatom verbunden sind, und wobei es sich bei den Gegenionen $X^+$, $Y^+$, vorzugsweise um Alkalikationen, insbesondere Natriumionen handeln kann, wobei $X^+$, $Y^+$ unabhängig voneinander gewählt werden können. Vorzugsweise weist ein organisches Phosphonat mindestens einen Rest $-PO(OH)(O^- X^+$ oder mindestens einen Rest $-PO(O^-)_2 X^+ Y^+$ auf.

Phosphonate und Sauerstoffsäuren des Phosphors, sowie ihr Aufbau und ihre Zusammensetzung werden beispielsweise im Lehrbuch "Holleman-Wiberg, Lehrbuch der Anorganischen Chemie" von N. Wiberg, 91.-100. Aufl., Walter de Gruyter & Co., 1985, ISBN 3-11-007511-3, S. 646 bis 652 erläutert. Vorzugsweise umfassen die Phosphonate Alkalikationen, insbesondere Natrium- und Kaliumkationen.

Schichtsilikatzusammensetzungen mit besonders vorteilhaften Materialeigenschaften, die eine sehr gute Retention und Drainage bei der Papierherstellung ermöglichen, können insbesondere erhalten werden, wenn das mindestens eine Phosphonat eine Verbindung umfasst, die ausgewählt ist, aus der Gruppe, bestehend aus Alkalisalzen von 1-Hydroxyethan-(1,1-diphosphonsäure) (abgekürzt HEDP), insbesondere Kalium- und/oder Natriumsalze hiervon, weiter insbesondere das Tetranatrium-, Trinatrium-, Dinatriumsalz, Dikalium-, Trikaliumalz hiervon, Alkalisalze von Aminotris(methylenphosphonsäure) (ATMP), insbesondere Natriumsalze hiervon, weiter insbesondere das Pentanatriumsalz hiervon, Alkalisalze von Ethylendiamin-tetra(methylenphosphonsäure) (EDTMP), insbesondere Natriumsalze hiervon, weiter insbesondere das Hexa- und Pentanatriumsalz hiervon, Alkalisalze von Diethylentriamin-penta(methylenphosphonsäure), insbesondere Natriumsalze hiervon, weiter insbesondere Dinatrium- und Heptanatriumsalze hiervon, Alkalisalze von Hydroxyethyl-amino-di(methylen-phosphonsäure), insbesondere Natriumsalze hiervon, insbesondere das Di- und Tetranatriumsalz hiervon, Hexamethylendiamintetra(methylenphosphonsäure), insbesondere Natriumsalze hiervon, weiter insbesondere das Hexanatriumsalz hiervon, 2-Phosphonobutan-1,2,4-tricarbonsäure (PBTC), insbesondere Natriumsalze hiervon, weiter insbesondere das Tetranatriumsalz hiervon, und deren Gemischen.

Besonders gute Ergebnisse wurden bei einem Einsatz von HEDP als $Na_4$-Salz (Cublen® K 8514 P bzw. K 3014), $Na_2$-Salz (Cublen® K 9012 P bzw. K 2012) oder $K_3$-Salz (Cublen® K 4023), sowie von EDTMP als $Na_6$-Salz (Cublen® E 3016) und von ATMP als $Na_5$-Salz (Cublen® A 4015, Cublen®-Produkte jeweils erhältlich von Fa. Zschimmer&Schwarz) oder Gemischen hiervon erhalten.

Der Begriff "Alkalisalz" umfasst in Bezug auf Phosphonate Salze, die als Kationen ein oder mehrere Kationen insbesondere ausgewählt aus der Gruppe bestehend aus Natrium-, Lithium-, Kalium-, Rubidium-, Cäsium-Kationen und Gemischen dieser Kationen, vorzugsweise ausgewählt aus der Gruppe bestehend aus Natrium-, Lithium-, Kalium-Kationen und deren Gemischen, bevorzugt Natrium-Kationen, aufweisen.

In analoger Weise zu den Phosphonaten können auch andere Komplexbildner als Behandlungskomponente eingesetzt werden. Diese Behandlungskomponenten können sowohl einzeln als auch im Gemisch miteinander eingesetzt werden. Geeignete Behandlungskomponenten sind beispielsweise Hydroxycarbonsäuren und deren Alkalimetallsalze, insbesondere Natriumsalze. Beispielhafte Verbindungen sind Natriumtartrat oder -gluconat oder bevorzugt Natriumcitrat.

Geeignet sind auch Aminocarbonsäuren, wie Diethylentriaminpentaessigsäure (DTPA), Nitrilotriessigsäure (NTA), Ethylenediamin-N,N'-bis(2-hydroxyphenylessigsäure) (EDDHA) und Ethylendiamintetraessigsäure (EDTA).

Weiter sind auch Di- oder Tricarbonsäuren, wie Malonsäure, Bernsteinsäure, Glutarsäure, Adipinsäure und Oxalsäure. Die Säuren werden bevorzugt in Form ihrer Alkalimetallsalze, insbesondere Natriumsalze eingesetzt.

Beispielhafte Behandlungskomponenten, die im erfindungsgemäßen verfahren eingesetzt werden können, sind Iminodibernsteinsäuresalze, (N-(1,2-Dicarboxyethyl)-asparaginsäuresalze, Polysuccinimide, Polysuccinimid-Teilhydrolysate, sowie Polyasparaginsäuren

Als Iminodibernsteinsäuresalz kann beispielsweise ein Natrium-, Kalium-, Lithium-, Ammonium- und/oder Kaliumsalz hiervon, vorzugsweise Iminodibernsteinsäure-Tetranatriumsalz eingesetzt werden.

Gemäß einer Ausführungsform kann Polysuccinimid und/oder ein Polysuccinimid-Teilhydrolysat als Behandlungskomponente verwendet werden. Der Begriff "Teilhydrolysat" kann insbesondere umschreiben, dass das Polysuccinimid beispielsweise mindestens 10 %, vorzugsweise mindestens 20 %, bevorzugt mindestens 50 %, insbesondere 10 bis 90%, bevorzugt 40-60% der Ringsysteme des Polysuccinimids in geöffneter Form vorliegend, insbesondere durch Hydrolyse in geöffneter Form vorliegend, aufweist.

Gemäß einer weiteren Ausführungsform kann Polyasparaginsäure als Behandlungskomponente eingesetzt werden.

Schichtsilikatzusammensetzungen, die bei der Papierherstellung zu einer besonders guten Retention und Drainage führen, können weiter insbesondere erhalten werden, wenn das Gesamtgewicht an Behandlungskomponente, insbesondere Phosphonaten, Iminodibernsteinsäuresalzen, Polysuccinimiden, Polysuccinimid-Teilhydrolysaten, und Polyasparaginsäuren, vorzugsweise an Phosphonaten, zugesetzt werden, mindestens 0,5 Gew.-%, vorzugsweise 0,5 bis 2 Gew.-%, bevorzugt mindestens 1 bis 2 Gew.-%, bezogen auf das Gesamtgewicht an dem bereitgestellten einwertige Kationen enthaltenden Schichtsilikat beträgt.

Falls bei dem Verfahren eine Herstellung des einwertige Kationen enthaltenden Schichtsilikats, das vorzugsweise einen Anteil von einwertigen Kationen an der Gesamtkationenaustauschkapazität von vorzugsweise mindestens 50%, weiter vorzugsweise mindestens 60%, insbesondere mindestens 70%, bevorzugt mindestens 80%, weiter bevorzugt mindestens 90% aufweist, gemäß der oben beschriebenen bevorzugten Ausführungsform ausgehend von einem mindestens einen Vorläufer-Schichtsilikat erfolgt, so wird im Rahmen der vorliegenden Anmeldung angenommen, dass das Gewicht des hergestellten einwertige Kationen enthaltenden Schichtsilikats gleich dem Gewicht des zu seiner Herstellung eingesetzten Vorläufer-Schichtsilikats ist.

Schichtsilikatzusammensetzungen, die beispielsweise bei der Papierherstellung zu einer besonders guten Retention und Drainage führen, können insbesondere erhalten werden, wenn das Gewichtsverhältnis des Gesamtgewichts an Aktivierungsreagenz, insbesondere an Alkalicarbonaten, Ammoniumcarbonat, Ammoniumhydrogencarbonat und Alkalihydrogencarbonaten, insbesondere an Natriumcarbonat und Natriumhydrogencarbonat, zum Gesamtgewicht an Behandlungskomponente, insbesondere an Phosphonaten, Iminodibernsteinsäuresalzen, Polysuccinimiden, Polysuccinimid-Teilhydrolysaten und Polyasparaginsäuren, vorzugsweise an Phosphonaten, im Bereich 1,0 bis 4,5, vorzugsweise im Bereich 1,25 bis 4, bevorzugt im Bereich 1,5 bis 3,5 liegt.

Insbesondere kann das Gewichtsverhältnis des Gesamtgewichts an Aktivierungsreagenz, insbesondere Alkalicarbonaten, Ammoniumcarbonat, Ammoniumhydrogencarbonat und Alkalihydrogencarbonaten, insbesondere an Natriumcarbonat und Natriumhydrogencarbonat, zum Gesamtgewicht an Behandlungskomponenten, insbesondere Phosphonaten, Iminodibernsteinsäuresalzen, Polysuccinimiden, Polysuccinimid-Teilhydrolysaten und Polyasparaginsäuren, vorzugsweise an Phosphonaten, die während des erfindungsgemäßen Verfahrens dem Vorläufer-Schichtsilikat zugegeben werden, im Bereich 1,0 bis 4,5, vorzugsweise im Bereich 1,25 bis 4, bevorzugt im Bereich 1,5 bis 3,5 liegen.

Gemäß einer Ausführungsform kann das erfindungsgemäße Verfahren zu einem zeitlich späteren Zeitpunkt noch eine Nachbehandlung der Schichtsilikatzusammensetzung umfassen, während der zusätzliche Behandlungskomponente, insbesondere Phosphonate, Iminodibernsteinsäuresalze, Polysuccinimide, Polysuccinimid-Teilhydrolysate, Polyasparaginsäuren, sowie zusätzliches Aktivierungsreagenz, insbesondere Alkalicarbonate, Alkalihydrogencarbonate, Ammoniumcarbonat, Ammoniumhydrogencarbonat, sowie deren Gemischen der Schichtsilikatzusammensetzung zugesetzt werden und mit dieser vermengt werden.

Gemäß einer weiteren Ausführungsform kann das erfindungsgemäße Verfahren auch zu einem beliebigen Zeitpunkt unterbrochen werden und zu einem späteren Zeitpunkt fortgesetzt werden. Dies bietet den Vorteil, dass Zwischenprodukte hergestellt werden können, die zu einem späteren Zeitpunkt anwendungsspezifisch, ggf. unter Zusatz weiterer Komponenten zu einer Schichtsilikatzusammensetzung gewünschter Spezifikation weiterverarbeitet werden können.

Während des Verfahrens zur Herstellung einer Schichtsilikatzusammensetzung können zu einem beliebigen Zeitpunkt weitere Komponenten, die von einem Fachmann ausgewählt werden können, zugesetzt werden. Beispielsweise können ein oder mehrere Komponenten ausgewählt aus der Gruppe, bestehend aus organischen und/oder anorganischen Lösungsmitteln, insbesondere Wasser, anorganischen und/oder organischen Säuren und deren Salzen, anorganischen und/oder organische Basen und deren Salzen, Tensiden, Flockungsmitteln, Farbstoffen, etc. zugegeben werden.

Die mit dem erfindungsgemäßen Verfahren erhaltene Schichtsilikatzusammensetzung kann in eine transportfähige Form überführt werden, indem die Schichtsilikatzusammensetzung beispielsweise getrocknet oder zu Formkörpern geformt wird. Geeignete Formkörper sind beispielsweise Granulate, Extrudate oder auch Tabletten, die durch Pressen erhalten werden.

Die mit dem erfindungsgemäßen Verfahren erhaltene Schichtsilikatzusammensetzung kann jedoch unmittelbar weiter verarbeitet und beispielsweise in der Papierherstellung verwendet werden.

Wie bereits oben erläutert, kann beim erfindungsgemäßen Verfahren direkt ein Schichtsilikat eingesetzt werden, das bereits einen Anteil an einwertigen Kationen aufweist oder es wird von einem Vorläufer-Schichtsilikat ausgegangen, das einen relativ hohen Anteil an mehrwertigen Kationen aufweist, wobei die mehrwertigen Kationen durch einwertige Kationen ausgetauscht werden.

Gemäß einer besonders bevorzugten Ausführungsform umfasst das erfindungsgemäße Verfahren die Herstellung eines einwertige Kationen enthaltenden Schichtsilikats aus einem Vorläufer-Schichtsilikat, insbesondere Calciumbentonit, durch Umsetzung mit einem Aktivierungsreagenz, insbesondere Natriumcarbonat oder Natriumhydrogencarbonat, in Kombination mit der Behandlung mit einer Behandlungskomponente, insbesondere eines Phosphonats und/oder mindestens eines Iminodibernsteinsäuresalzes und/oder mindestens eines Polysuccinimids und/oder mindestens eines Polysuccinimid-Teilhydrolysats und/oder mindestens einer Polyasparaginsäure.

Ohne an diese Theorie gebunden sein zu wollen, nehmen die Erfinder an, dass der Einsatz eines durch die zweistufige Behandlung erhaltenen einwertige Kationen enthaltenden Schichtsilikats gewährleistet, dass in einer wässrigen Dispersion des einwertige Kationen enthaltenden Schichtsilikats eine hohe Anzahl an einzeln delaminierten Schichtsilikatplättchen vorhanden ist, die im Bereich ihrer Ränder und Kanten zahlreiche freie OH-Gruppen aufweisen, wobei dies in Abhängigkeit von den weiteren Komponenten in der wässrigen Schichtsilikatdispersion zu vorteilhaften oder abträglichen Wechselwirkungen führen kann. Die sehr vorteilhaften Materialeigenschaften der Schichtsilikatzusammensetzungen die mit dem erfindungsgemäßen Verfahren erhalten werden erklärt die Erfinder dadurch, dass die Behandlungskomponente, insbesondere Phosphonate, sowie Iminodibernsteinsäuresalze, Polysuccinimide, Polysuccinimid-Teilhydrolysate und Polyasparaginsäuren mit diesen freien OH-Gruppen und/oder auf der Schichtsilikatoberfläche benachbart vorliegenden Aluminiumionen in sehr vorteilhafter Weise wechselwirken können. Mögliche Wechselwirkungen oder Reaktionen im Bereich der Ränder und Kanten von Schichtsilikatplättchen, wie beispielsweise von Bentonit- oder Montmorillonitplättchen, sind beispielsweise Kondensations-, Komplexierungs- und/oder Adsorptionsreaktionen. Zudem nehmen die Erfinder an, dass durch die Wechselwirkung der Behandlungskomponente, insbesondere der Phosphonate, Iminodibernsteinsäuresalze, Polysuccinimide, Polysuccinimid-Teilhydrolysate oder Polyasparaginsäuren mit der Oberfläche der Schichtsilikatplättchen diese zumindest teilweise umgeladen wird. Weiterhin wird angenommen, dass die Behandlungskomponente, insbesondere die Phosphonate, Iminodibernsteinsäuresalze, Polysuccinimide, Polysuccinimid-Teilhydrolysate und/oder Polyasparaginsäuren, Calciumionen in einer Schichtsilikatdispersion sehr effektiv komplexieren können, was in hohem Maße vorteilhaft ist, da bereits Spuren von Calciumionen in einer Schichtsilikatdispersion genügen, um die Mikrostruktur der Schichtsilikatplättchen zu verändern beziehungsweise eine Flockung der fein dispergierten Schichtsilikatplättchen zu bewirken.

Bei einer zwei- oder mehrstufigen Durchführung des erfindungsgemäßen Verfahrens kann zudem eine Nachaktivierung von bereits aktivierten und/oder partiell aktivierten Schichtsilikaten durch Zugabe weiterer Behandlungskomponente, insbesondere Phosphonat und/oder Iminodibernsteinsäuresalz und/oder Polysuccinimid und/oder Polysuccinimid-Teilhydrolysat und/oder Polyasparaginsäure, erfolgen, wodurch eine teilweise oder im Wesentlichen vollständige Komplexierung von mehrwertigen Kationen, wie Calciumionen, erreicht werden kann, insbesondere anwendungsspezifisch und zeitnah, vor der Verwendung der Schichtsilikatzusammensetzung beispielsweise bei der Papierherstellung.

Die mit dem erfindungsgemäßen Verfahren erhaltene Schichtsilikatzusammensetzung zeichnet sich durch die Eigenschaft aus, bei Kontakt mit Wasser in besonders hohem Maß zu delaminieren.

Die Schichtsilikatzusammensetzung weist wie bereits weiter oben beschrieben einen Gehalt an Partikeln mit einem Partikeldurchmesser von weniger als 600 nm von mindestens 40 Gew.-%, vorzugsweise mindestens 45 Gew.-%, bevorzugt mindestens 50 Gew.-%, insbesondere 40 bis 60 Gew.-% auf, bezogen auf das Gesamtgewicht an Schichtsilikatpartikeln mit einem Partikeldurchmesser von 0,2 bis 100 $\mu$m.

Die Schichtsilikatzusammensetzung kann beispielsweise als Extrudat, Knetmasse oder Slurry vorliegen. Insbesondere kann die Schichtsilikatzusammensetzung in Form eines Pulvers, Granulats, Extrudats, Formkörpers oder einer Slurry vorliegen. Die Formgebung der Schichtsilikatzusammensetzung, insbesondere Trocknen, Granulieren, Bilden eines Formkörpers, kann nach beliebigen Verfahren erfolgen.

Die Schichtsilikatzusammensetzung kann gemäß einer Ausführungsform Flockungsmittel und/oder Papiermaterialfasern enthalten.

Geeignete Flockungsmittel sowie weitere Komponenten, die der Schichtsilikatzusammensetzung beigefügt werden können, sind weiter unten beschrieben.

Ein weiterer Gegenstand der Erfindung betrifft die Verwendung der mit dem oben beschriebenen Verfahren erhaltenen Schichtsilikatzusammensetzung zur Herstellung von Papier, Pappe, Karton oder von papierhaltigen Verbundwerkstoffen.

Bei der erfindungsgemäßen Verwendung einer solchen Schichtsilikatzusammensetzung zur Herstellung von Papier, Pappe, Karton, papierhaltigen Verbundwerkstoffen kann insbesondere eine Verbesserung der Retention, insbesondere der Gesamt- und/oder Füllstoffretention, sowie eine Verbesserung der Drainage erreicht werden.

Der Begriff "Gesamtretention" gibt das Verhältnis der zur Herstellung von Papier, Pappe, Karton, papierhaltigen Verbundwerkstoffen eingesetzten trockenen Stoffmenge zu der im fertigen Papier, Pappe, Karton, papierhaltigen Verbundwerkstoffen verbliebenen Stoffmenge an, während der Begriff "Füllstoffretention" das Verhältnis von Füllstoffanteil der zur Herstellung von Papier, Pappe, Karton, papierhaltigen Verbundwerkstoffen eingesetzten trockenen Stoffmenge zu dem Füllstoffanteil des(r) fertigen Papiers, Pappe, Kartons, papierhaltigen Verbundwerkstoffs angibt.

Der Begriff "Füllstoffe" umfasst im Rahmen der vorliegenden Erfindung in dem Papier vorliegende Komponenten, die bei 25°C als Feststoffe vorliegen, bei denen es sich nicht um Papiermaterialfasern, insbesondere nicht um Zellstofffasern handelt. Insbesondere kann bei einer erfindungsgemäßen Verwendung einer Schichtsilikatzusammensetzung eine sehr gute Retention von Calciumcarbonat, Kaolin, Aluminiumsilikaten und -oxidhydraten, Satinweiß, Talkum, Gips, Baryt, Calciumsilikat und Lithopone, Kieselgur, sowie von organischen Füllstoffen erreicht werden.

Zudem kann eine erfindungsgemäße Verwendung der Schichtsilikatzusammensetzung zum Streichen und/oder Beschichten von Papier, Pappe, Karton, papierhaltigen Verbundwerkstoffen und/oder zur Störstoffbindung, insbesondere während der Papierherstellung, und/oder als Komponente eines dualen Retentionsmittelsystems oder eines Mehrkomponenten-Retentionsmittelsystems erfolgen.

Die Begriffe "duales Retentionsmittelsystem" beziehungsweise "Mehrkomponenten-Retentionsmittel-system" umfassen im Rahmen der vorliegenden Anmeldung jegliche Mikropartikelsysteme und insbesondere jegliche Systeme, die neben einer durch Behandeln mit einer Behandlungskomponente, insbesondere Phosphonaten und/oder Iminodibernsteinsäuresalzen und/oder Polysuccinimiden und/oder Polysuccinimid-Teilhydrolysaten und/oder Polyasparaginsäuren erhältlichen Schichtsilikatzusammensetzung ein oder mehrere kationische Polymere und/oder anionisch geladene Mikropartikel, wie beispielsweise anionisch geladene organische Komponenten, Silicapartikel, insbesondere anionische Polymere, und/oder quellfähige Tonmaterialien, sowie Zellstoff und/oder ein oder mehrere andere Papiermaterialfasern umfassen. Besonders vorteilhafte Retentionsergebnisse können insbesondere erhalten werden, wenn ein Mehrkomponenten-Retentionsmittelsystem verwendet wird, das neben einer durch Behandeln mit einer Behandlungskomponente, insbesondere Phosphonaten und/oder Iminodibernsteinsäuresalzen und/oder Polysuccinimiden und/oder Polysuccinimid-Teilhydrolysaten und/oder Polyasparaginsäuren erhältlichen Schichtsilikatzusammensetzung, insbesondere einer mit Phosphonaten aktivierten Bentonitzusammensetzung, ein oder mehrere anionisch geladene Mikropartikel und/oder ein oder mehrere kationisch geladenen Mikropartikel, insbesondere ein oder mehrere kationisch geladene Polyacrylamide, sowie optional Zellstoff umfasst. Insbesondere kann die durch das erfindungsgemäße Verfahren erhältliche Schichtsilikatzusammensetzung als Schichtsilikatzusammensetzung in dem Hydrocol® System oder dem Telioform® System eingesetzt werden oder zu diesem zugegeben werden.

Die nach dem oben beschriebenen Verfahren erhaltene Schichtsillikatzusammensetzung kann direkt, d.h. in Form einer Suspension, bei der Papierherstellung eingesetzt werden. Es ist jedoch auch möglich, die Schichtsilikatzusammensetzung als trockenes Pulver oder als Granulat einzusetzen. Gemäß einer Ausführungsform wird die Schichtsilikatzusammensetzung getrocknet und gemahlen. Auf diese Weise lässt sich die Schichtsilikatzusammensetzung beispielsweise leicht verpacken und transportieren. Vor der Verwendung bei der Papierherstellung wird dann das trockene Pulver in Wasser eingerührt, sodass eine Suspension erhalten wird. Das Einrühren erfolgt bevorzugt unter Einwirkung hoher Scherkräfte, sodass eine Delaminierung des Schichtsilikats erfolgt und eine Suspension mit einem hohen Anteil kleiner Partikel erhalten wird. Der Feststoffgehalt der wässrigen Suspension beträgt bevorzugt 0,1 bis 10 Gew.-%, weiter bevorzugt 1 bis 5 Gew.-% und gemäß einer weiteren Ausführungsform 1 bis 3 Gew.-%.

Bei einer Herstellung von Papier, Pappe, Karton, papierhaltigen Verbundwerkstoffen kann von der Schichtsilikatzusammensetzung eine Menge von 0,4 bis 3 kg pro Tonne Papiermaterial-Faserstoff, vorzugsweise eine Menge von 0,5 bis 2 kg pro Tonne an Papiermaterial-Faserstoff, insbesondere Zellstoff, zugesetzt werden.

Bei der Papierherstellung kann an sich in bekannter Weise vorgegangen werden. Dabei wird zunächst in üblicher Weise eine Papierfasersuspension hergestellt. Die Papierfasersuspension enthält bevorzugt 0,1 bis 5 Gew.-%, weiter bevorzugt 0,5 bis 3 Gew.-% Papiermaterialfasern.

Als Papiermaterialfasern werden im Rahmen der vorliegenden Erfindung Fasern angesehen, die zur Herstellung von Papier eingesetzt werden und beispielsweise in dem später gebildeten Papier als solche oder in einer chemisch, biologisch oder physikalisch veränderten Form vorliegen können. Papiermaterialfasern sind beispielsweise, jedoch nicht ausschließlich, zellstoffhaltige Faserstoffe.

Zur Herstellung der Papierfasersuspension kann sowohl von Primärfaserstoffen ausgegangen werden als auch von Sekundärfaserstoffen, also Recyclingstoffen, insbesondere Altpapier, die nach dem Gebrauch noch einmal dem Produktionsprozess zugeführt werden.

Die Papierfasersuspension kann übliche Füllstoffe enthalten, wie Kaolin, Talkum, Gips, Bariumsulfat, Kreide, Titanweiß. Diese Füllstoffe werden je nach der gewünschten Papierqualität beispielsweise in einem Anteil von 10 bis 40 Gew.-%, gemäß einer weiteren in einem Anteil von 20 bis 35 Gew.-%, bezogen auf den Faseranteil, der Papierfasersuspension zugesetzt.

Die Papierfasersuspension kann übliche Hilfsstoffe in üblichen Mengen enthalten, beispielsweise Farbstoffe, Entschäumer, Dispergiermittel und Netzmittel.

Die Papierfasersuspension kann in üblicher Weise hergestellt werden. Dazu kann beispielsweise ein Papierbrei unter Einwirken hoher Scherkräfte in Wasser eingebracht werden, sodass die Papierfasern in Wasser suspendiert werden und eine homogene Suspension erhalten wird. Ggf. Können Rinigungsschritte vorgesehen werden, in denen beispielsweise größere Agglomerate aus der Suspension abgetrennt werden.

Die Papierfasersuspension wird dann ausgeflockt. Zum Flocken wird der Papierfasersuspension ein Flockungsmittel zugegeben. Es kann sowohl ein einzelnes als auch eine Kombination verschiedener Flockungsmittel zur Papierfasersuspension zugegeben werden. Gemäß einer bevorzugten Ausführungsform wird der Papierfasersuspension als Flockungsmittel ein kationisches Polymer zugegeben. Das kationische Polymer weist bevorzugt ein hohes Molekülgewicht auf. Gemäß einer Ausführungsform weist das kationische Polymer ein Molekülgewicht von mehr als 200.000 g/mol, gemäß einer weiteren Ausführungsform ein Molekülgewicht von mehr als 500.000 g/mol auf. Als Molekülgewicht wird das gewichtsgemittelte Molekülgewicht der Molekülgewichtsverteilung des Polymers bezeichnet. Das kationisch geladene Polymer kann aus gleichen Monomereinheiten oder zwei oder mehr unterschiedlichen Monomereinheiten aufgebaut sein. Gemäß einer Ausführungsform wird als kationisches Polymer ein Polyacrylamid eingesetzt. Als Polyacrylamid kann gemäß einer Ausführungsform ein Homopolymerisat von Methacrylamid oder Acrylamid oder auch ein kationisch modifiziertes Copolymerisat von Acrylamid und/oder Methacrylamid eingesetzt werden. Insbesondere kann als kationisches Polymer ein Copolymerisat eingesetzt werden, das Methacrylamid- oder Acrylamid-Monomereinheiten, sowie eine oder mehrere, gleiche oder unterschiedliche, kationische Monomereinheiten umfasst. Gemäß einer bevorzugten Ausführungsform wird als Flockungsmittel ein Copolymer verwendet, das Acrylamid und Acryloxyethyltrimethylammoniumchlorid als Monomereinheiten umfasst.

Neben den genannten kationischen Polymeren können auch noch andere, in der Papierherstellung übliche kationische Polymere verwendet werden. Beispielhafte kationische Polymere sind kationische Stärke, Polyethylenimin, Produkte aus Polyaminen und Epichlorhydrin oder Polymere von Diallyldimethylammoniumchlorid.

Das Flockungsmittel, insbesondere das kationische Polymer, wird bevorzugt in einem Anteil von zumindest 0,03 Gew.-%, gemäß einer Ausführungsform in einem Anteil von 0,06 bis 0,2 Gew.-%, bezogen auf das Trockengewicht der Papierfasersuspension der Papierfasersuspension zugesetzt. Die der Papierfasersuspension zugesetzte Menge an Flockungsmittel sollte ausreichend sein, sodass die Papierfasern Flocken bilden.

Ferner können auch anionische Polymere als Flockungsmittel eingesetzt werden. Dies kann beispielsweise bei Verwendung von Recyclingpapier vorteilhaft sein.

Die Zugabe des Flockungsmittels zur Papierfasersuspension erfolgt bevorzugt während auf die Suspension Scherkräfte einwirken.

Die nach dem erfindungsgemäßen Verfahren erhaltene Schichtsilikatzusammensetzung kann zusammen oder getrennt von dem Flockungsmittel zugegeben werden.

Gemäß einer bevorzugten Ausführungsform wird zur Papierfasersuspension zunächst das Flockungsmittel, bevorzugt ein kationisches Polymer zugegeben. Die Zugabe des Flockungsmittels bewirkt das Ausflocken der Papierfasern. Die Flocken können ggf. beispielsweise unter der Einwirkung von Scherkräften zu Mikroflocken zerkleinert werden, welche dem Abbau durch Einwirkung von Scherkraft widerstehen, sodass die Stabilität der Faserflocken erhöht wird.

Zur ausgeflockten und ggf. einer Behandlung unter Einwirkung von Scherkräften unterworfenen Papierfasersuspension wird dann die nach dem erfindungsgemäßen Verfahren erhaltene Schichtsilikatzusammensetzung gegeben. Bevorzugt wird die Schichtsilikatzusammensetzung in Form einer wässrigen Aufschlämmung zugegeben.

Die Zugabe der Schichtsilikatzusammensetzung kann zu jedem dem Fachmann geeigneten Zeitpunkt erfolgen. Bevorzugt wird die Schichtsilikatzusammensetzung unter Einwirkung hoher Scherkraft zugegeben, vorzugsweise unmittelbar bevor die Suspension ausgegossen wird.

Um die Suspension zu scheren, können übliche Vorrichtungen eingesetzt werden.

Die Suspension wird dann in üblicher Weise zu einer Papierbahn oder einem Papierblatt verarbeitet, indem die nach der Zugabe des Schichtsilikats erhaltene Suspension beispielsweise auf ein Sieb gegeben wird. Die Papierbahn bzw. das Papierblatt wird dann in üblicher Weise weiter verarbeitet und beispielsweise getrocknet und ggf. gestrichen.

Gemäß einer Ausführungsform wird vor, gemeinsam mit oder nach der Zugabe der Schichtsilikatzusammensetzung der Suspension ein anionisches Polymer zugegeben.

Bei dem anionisch geladenen Polymer kann es sich insbesondere um ein Polymer handeln, das durch Polymerisation von gleichen oder unterschiedlichen Monomeren erhalten werden kann, wobei die Monomere ein oder mehrere Monomere, ausgewählt aus der Gruppe, bestehend aus (Methyl)acrylsäure und deren Salzen, Sulfoethyl-(meth)acrylat, Itaconsäure, 2-Acrylamido-2-methyl-propansulfonat, Allylsulfonsäure, Styrolsulfonsäure, Vinylsulfonsäure, Maleinsäure, sowie andere mindestens zwei Säurefunktionen umfassende Verbindungen und deren Salze, umfassen können.

Die Verwendung der nach dem erfindungsgemäßen Verfahren erhaltenen Schichtsilikatzusammensetzung bei der Papierherstellung bewirkt eine zur Verbesserung der Retention, insbesondere der Gesamt- und/oder Füllstoffretention, sowie der Drainage bei einer Herstellung von Papier, Pappe, Karton, papierhaltigen Verbundwerkstoffen.

Ein weiterer Gegenstand der Erfindung betrifft Papier, Karton, Pappe und/oder papierhaltiger Verbundwerkstoff, umfassend eine Schichtsilikatzusammensetzung, wie sie oben beschrieben wurde und wie sie mit dem erfindungsgemäßen Verfahren erhalten wird.

Die Erfindung wird im Weiteren anhand von Beispielen sowie unter Bezugnahme auf die beigefügten Figuren näher erläutert. Dabei zeigt:

Fig. 1:  ein Diagramm, das Total- und Füllstoff-Retentionsergebnisse mit unterschiedlich behandelten Bentoniten bei konstanter Polymer- (50 g/t Zellstoff) und variierter Bentonitzugabe veranschaulicht;

Fig. 2:  ein Diagramm, das Drainageergebnisse mit unterschiedlich behandelten Bentoniten bei konstanter Polymer- (50 g/t Zellstoff) und variierter Bentonitzugabe veranschaulicht.

METHODEN UND MATERIALIEN

Zur Bestimmung der Parameter des erfindungsgemäßen Verfahrens und der dabei eingesetzten Materialien werden die nachstehenden Methoden eingesetzt:

1. Bestimmung der Gesamtkationenaustauschkapazität (CEC) und des Anteils von Kationen

Bei der Bestimmung des Anteils von Alkaliionen, insbesondere an der Gesamtkationenaustauschkapazität, werden nur die Anteile an Natrium-, Kalium-, und Lithiumkationen berücksichtigt. Die Summe der Anteile an Natrium-, Kalium-, und Lithiumkationen, insbesondere an der Gesamtkationenaustauschkapazität, entspricht daher dem Anteil von Alkaliionen an der Gesamtkationenaustauschkapazität, während der Anteil von weiteren Alkaliionen (insbesondere Rubidium-, Cäsium- und Francium-Kationen) nicht berücksichtigt wird.

Bei der Bestimmung des Anteils von einwertigen Kationen, insbesondere an der Gesamtkationenaustauschkapazität, werden nur die Anteile an Ammonium-, Natrium-, Kalium-, und Lithiumkationen berücksichtigt. Die Summe der Anteile an Ammonium-, Natrium-, Kalium-, und Lithiumkationen, insbesondere an der Gesamtkationenaustauschkapazität, entspricht daher dem Anteil von einwertigen Kationen an der Gesamtkationenaustauschkapazität, während der Anteil von weiteren einwertigen Kationen nicht berücksichtigt wird.

Bei der Bestimmung des Anteils von zweiwertigen Kationen (von zwei- und höherwertigen Kationen), insbesondere an der Gesamtkationenaustauschkapazität, werden nur die Anteile an Magnesium- und Calciumkationen (nur die Anteile an Aluminium-, Eisen-, Magnesium- und Calciumkationen) berücksichtigt. Die Summe der Anteile der vorstehend jeweils genannten Kationen, insbesondere an der Gesamtkationenaustauschkapazität, entspricht daher dem Anteil von zweiwertigen Kationen (von zwei- und höherwertigen Kationen) an der Gesamtkationenaustauschkapazität, während der Anteil von weiteren Kationen nicht berücksichtigt wird.

Die Bestimmung der Anteile an Ammoniumionen an der CEC (soweit berücksichtigt) erfolgt in einer separaten Bestimmung, indem der Stickstoffgehalt des zu untersuchenden Schichtsilikats elementaranalytisch ermittelt wird. Hierbei wird angenommen, dass aller Stickstoff in Form von Ammoniumionen vorliegt. Die Bestimmung von Kohlenstoff-, Stickstoff- und Wasserstoffanteilen kann insbesondere mittels der Verbrennungsmethode erfolgen.

a) Prinzip der CEC-Bestimmung:

Das zu untersuchende Schichtsilikat enthaltende oder aus Schichtsilikat bestehende Material (nachstehend als Schichtsilikat bezeichnet), beispielsweise ein Ton, wird mit einem großen Überschuss an wässriger $NH_4Cl$ - Lösung behandelt, ausgewaschen und die auf dem Schichtsilikat verbliebene $NH_4^+$ - Menge als Stickstoff an einem Elementaranalysengerät (Fa. Elementar) bestimmt.

$$Me^+ (Ton)^- + NH_4^+ \rightarrow NH_4^+ (Ton)^- + Me^+$$

$$(Me^+ = K^+, Na^+, 1/2\ Ca^{2+}, 1/2\ Mg^{2+}....\ )$$

Geräte: Sieb 63 $\mu$m; Erlenmeyer - Schliffkolben, 300ml; Analysenwaage; Membranfilternutsche, 400 ml; Zellulose-Nitrat-Filter, 0,2$\mu$m - (Fa. Machery & Nagel); Vakuumsaugflasche 500ml; Trockenschrank 110 °C; Rückflusskühler; Heizplatte; 250ml Messkolben; 600 ml Becherglas; ICP - OES; Pipette 5 ml; 25 ml Messzylinder.

Chemikalien: $NH_4Cl$ - Lösung, 2mol/l p.a. (Merck); Salzsäure 1:2.

Durchführung: 5 g Schichtsilikat werden quantitativ durch ein 63 μm Sieb gesiebt und bei 110 °C bis zur Gewichtskonstanz getrocknet. Danach werden auf der Analysenwaage zwischen 200 und 300 mg in einen Erlenmeyer-Schliffkolben eingewogen. Man gibt 25 ml 2 molare $NH_4Cl$ - Lösung zu und kocht die Suspension eine Stunde am Rückfluss.

Nach einer Standzeit von 24 h wird das $NH_4^+$ - Schichtsilikat über eine Membranfilternutsche abfiltriert. Mit destilliertem Wasser wird der Filterkuchen in kleinen Portionen mit insgesamt 1200 ml Wasser gewaschen, das anschließend portionsweise in einem 600 ml Becherglas eingeengt wird.

Das ausgewaschene $NH_4^+$ - Schichtsilikat wird vom Filter abgenommen und während 16 Stunden bei 110 °C getrocknet. Vom trockenen Filterkuchen wird der N-Gehalt am Elementaranalysator bestimmt.

Berechnung der Gesamtkationenaustauschfähigkeit:

Die Gesamtkationenaustauschfähigkeit (CEC) des Schichtsilikats ist der mittels Elementaranalyse ermittelte $NH_4^+$-Gehalt des $NH_4^+$-Schichtsilikats (CEC einiger in den Beispielen eingesetzter Tonmineralien in der nachstehenden Tabelle 3). Die Angaben erfolgen in mval/100 g Schichtsilikat (meq/100g). Hierbei wird angenommen, dass aller Stickstoff in Form von $NH_4^+$ vorliegt.

Beispiel: Stickstoff-Gehalt = 0,93 %;

Molekulargewicht: N = 14,0067 g/mol

$$CEC = \frac{0,93 \times 1000}{14,0067} = 66,4 \text{ mVal/100g Schichtsilikat}$$

Ausgetauschte Kationen

Bestimmung der freigesetzten Kationen

Die durch den Umtausch freigesetzten Kationen befinden sich im Waschwasser (Filtrat). Der Anteil und die Art von Kationen ("austauschbare Kationen"), insbesondere der Alkalikationen, wurde im Filtrat gemäß DIN 38406, Teil 22, spektroskopisch bestimmt. Beispielsweise wird zur AAS-Bestimmung das Waschwasser (Filtrat) eingeengt, in einen 250 ml Messkolben überführt und mit destilliertem Wasser bis zur Messmarke aufgefüllt. Geeignete Messbedingungen für FAAS sind aus den nachfolgenden Tabellen zu entnehmen.

Tabelle 1: Parameter zur FAAS Bestimmung Teil 1

| Element | Calcium | Kalium | Lithium | Magnesium | Natrium |
|---|---|---|---|---|---|
| Wellenlänge (nm) | 422,7 | 766,5 | 670,8 | 285,2 (202,6) | 589,0 |
| Spaltbreite (nm) : | 0,2 | 0,5 | 0,5 | 0,5 | 0,2 |
| Integr. Zeit (sek): | 3 | 3 | 3 | 3 | 3 |
| Flammengase: | $N_2O/C_2H_2$ | $Luft/C_2H_2$ | $Luft/C_2H_2$ | $N_2O/C_2H_2$ | $Luft/C_2H_2$ |
| Untergrundkomp.: | nein | nein | nein | ja | nein |
| Messart: | conc. | conc. | conc. | conc. | conc. |
| Ionisationspuffer: | 0,1 % KCl | 0,1% NaCl | 0,1% NaCl | 0,1% KCl | 0,1% KCl |
| Brennerposition | 15-20° | - | - | - | - |
| Eichstand (mg/l): | 1-5 mg/l | 1-5 mg/l | 2-10 mg/l | 0,5-3 mg/l (5-40 mg/l) | 1-5 mg/l |

Tabelle 2: Parameter zur FAAS Bestimmung Teil 2

| Element | Aluminium | Eisen |
|---|---|---|
| Wellenlänge (nm) : | 309,3 | 248,3 |
| Spaltbreite (nm) : | 0,5 | 0,2 |
| Integr. Zeit (sek): | 3 | 3 |
| Flammengase: | $N_2O/C_2H_2$ | $Luft/C_2H_2$ |
| Untergrundkomp.: | ja | nein |
| Messart: | conc. | conc. |
| Ionisationspuffer: | 0,1 % KCl | - |
| Brennerposition | - | - |
| Eichstand. (mg/l): | 10-50 mg/l | 1-5 mg/l |

Berechnung der Kationen:

$$Me = \frac{\text{Me-Wert (mg/l) x 100 x Verdünnung}}{\text{4 x Einwaage (in g) x Molmasse (g/mol)}} = mval/100g$$

Molmassen (g/mol): Ca=20,040; K=39,096; Li=6,94; Mg=12,156; Na=22,990; Al=8,994; Fe=18,616

2. Bestimmung von Retention und Drainage

Durchführung der Retentions- und Drainageversuche

Die Retentions- & Drainage-Versuche wurden an einem Gerät DRF 04, der Fa. BTG Instruments AB durchgeführt. Dabei wurde ein Zellstoff, der Sorte 910 BIO TOP 3, von der Firma Mondi Austria verwendet.
An dem Gerät wurden folgende Rührprofile bzw. Einstellungen gewählt:

Für die Retention:

Zellstoffsuspension: 1,3 Gew.-% an Zellstoff, bezogen auf das Gesamtgewicht der Zellstoffsuspension.
Polymer: Percol 178 (Ciba AG), 0,1 Gew.-% an Polymer, bezogen auf das Gesamtgewicht der Polymerlösung; frisch hergestellte Lösung.
Rührprofil: Während 3 s (Sekunden) bei 750 Upm (Umdrehungen pro Minute) Rühren und Polymerzugabe, dann während 15 s bei 1400 Upm Rühren, anschließend während 3 s bei 750 Upm Rühren und Bentonitzugabe und weiter während 7 s bei 1200 Upm Rühren, anschließend während 1 s bei 400 Upm Erfassung der Retention.
Das Gerät berechnet direkt die Total- und Füllstoffretention.

Für die Drainage:

Zellstoffsuspension: 1,3 Gew.-% an Zellstoff, bezogen auf das Gesamtgewicht der Zellstoffsuspension.
Polymer: Percol® 178, (Ciba® AG), 0,1 Gew.-% an Polymer, bezogen auf das Gesamtgewicht der Polymerlösung; frisch hergestellte Lösung.
Rührprofil: während 3s bei 750 Upm und Polymerzugabe, dann während 15s bei 1000 Upm Rühren, anschließend während 3s bei 750 Upm Bentonitzugabe und weiter während 7s bei 1200 Upm Rühren, anschließend Erfassung der Drainage.
Das Gerät berechnet direkt die Drainage nach voreingestellter Zeit, d. h. nach 5s, 10s und 30s.

3. Bestimmung des Schichtsilikatgewichts

Die Gewichtsangaben zu Schichtsilikaten (bzw. Schichtsilikatzusammensetzungen) beziehen sich, wenn nicht explizit abweichend angegeben, auf Schichtsilikate (bzw. Schichtsilikatzusammensetzungen), die eine Restfeuchtigkeit von 12 Gew.-%, aufweisen. Die Angabe der Restfeuchtigkeit ist auf das Gesamtgewicht an bei 130°C bis zur Gewichtskonstanz getrockneten Schichtsilikaten (bzw. Schichtsilikatzusammensetzungen) bezogen.

4. Anteil an Partikeln mit einem Partikeldurchmesser von weniger als 600 nm

Die Fraktionierung der Partikel mit einem Partikeldurchmesser von unter 0,2 und über 100 $\mu$m und deren Auftrennung in Partikel mit einem Partikeldurchmesser von weniger als 600 nm und mit 600 nm oder mehr kann gemäß C.B. Tanner und M.L. Jackson, "Nomographs of Sedimentation Times for Soil Particles Under Gravity or Centrifugal Acceleration", SOIL SCIENCE SOCIETY PROCEEDINGS, 12, Seite 60 bis 65 (1947) erfolgen. Zuerst erfolgt eine Abtrennung der Fraktion der Partikeln kleiner 2 $\mu$m im Schwerfeld, entsprechend der oben erwähnten Methode. Anschließend wird eine Abtrennung der Fraktion von Partikeln kleiner 600 nm im Zentrifugalfeld (an der Zentrifuge von der Fa. Heraeus Instruments, Megafuge 1.0) durchgeführt. Die Temperatur der aufzutrennenden Probe wird während der Abtrennung und Zentrifugation bei 20°C konstant gehalten und die Anlauf- und Auslaufzeiten der Zentrifuge werden gleich lang gehalten.

Nach Abtrennung der Teilchenfraktionen 0,2 $\mu$m bis weniger als 600 nm und von 600 nm bis 100 $\mu$m werden diese bei 130 °C bis zur Gewichtkonstanz getrocknet. Anschließend wird das jeweilige Gewicht der Teilchenfraktionen bestimmt.

5. Eingesetzte Materialien

a) Bentonite

Die in den nachstehend beschriebenen Beispielen eingesetzten Schichtsilikate sind in der Tabelle 3 dargestellt, wobei diese in den nachstehenden Beispielen auch als "Rohbentonite" bezeichnet werden:

Tabelle 3: Eingesetzte (Roh)-Bentonite

| | (Roh) - Bentonit 1 | (Roh) - Bentonit 2 |
|---|---|---|
| Hauptzwischenschichtkation [meq/100g] | $Na^+/Ca^{2+}$ | $Ca^{2+}$ |
| Anteil an austauschbarem $Ca^{2+}$ [meq/100g] ** | 58 | 57 |
| Anteil an austauschbarem $Na^+$ [meq/100g] ** | 64 | 2,7 |
| Anteil an austauschbarem $K^+$ [meq/100g] ** | 2,8 | 2 |
| Anteil an austauschbarem $Mg^{2+}$ [meq/100g] ** | 25 | 16 |
| CEC [meq/100g]* | 100 | 58 |
| Montmorillonitgehalt [%] | 98 | 64 |
| pH-Wert | 9,0 | 8,3 |
| Quellvolumen in dest. Wasser [ml/2g] | 11 | 6 |
| *Gesamtkationenaustauschkapazität der Probe<br>** bestimmt gemäß dem im vorstehenden Methodenteil beschriebenen Verfahren (Ammoniumchlorid-Austausch-Methode) | | |

b) Für die Bentonitaktivierung eingesetzte Salze

Folgende Alkalisalze wurden eingesetzt:

Natriumcarbonat (Soda), in technischer Qualität von der Fa. Solvay.

Phosphonate aus der Cublen® Familie wie 1-Hydroxyethan-(1,1-di-phosphonsäure) (HEDP, als $Na_4$-Salz und $Na_2$-Salz), Amino-tris(methylenphosphonsäure) (ATMP, als $Na_5$-Salz) und Ethylendiamin-tetra(methylenphosphonsäu-

re) (EDTMP, als $Na_6$-Salz), Fa. Zschimmer&Schwarz.

<u>c) Bei Retentions- und Drainageversuchen eingesetzte Polymere</u>

Es wurden kationisch geladene Polyacrylamide (PAM) der Ciba® AG eingesetzt. Dabei wurden die Polyacrylamide aus der Percol Familie, insbesondere Percol® 178, eingesetzt.

Die Erfindung wird nun anhand der nachstehenden, nicht beschränkenden Beispiele näher erläutert:

<u>BEISPIELE</u>

<u>Beispiel 1:</u>

<u>Bentonitaktivierung</u>

An einem Extruder (W&P-Kneter) wird der Rohton mit einem 25-38 Gew.-%-igen Wassergehalt vorgelegt und für 3 Minuten homogenisiert (vorkneten). Anschließend wird die entsprechende Menge an Salz bzw. Salzgemisch zugegeben. Das derart erhaltene Gemisch wird für die in der nachstehenden Tabelle jeweils angegebene Knetdauer geknetet, wobei bei einigen Versuchen das Kneten unterbrochen und ein weiteres Salz bzw. Salzgemisch zugegeben wurde, und anschließend bei 80 °C auf eine Restfeuchtigkeit von 12 Gew.-% getrocknet und anschließend auf einer Mühle (Schlagrotormühle der Fa. Retsch 0,12 mm Sieb) vorvermahlen und an einer der Ultrazentrifugalmühle (Fa. Retsch 0,08 mm Sieb) feinvermahlen.

Bei den Proben, die durch gleichzeitige Zugabe von Soda und Phosphonat hergestellt wurden, wurde eine Hauptknetzeit von 10 Minuten eingehalten. Bei den in der nachstehenden Tabelle angegebenen Proben, bei denen eine zeitlich versetzte Zugabe von Soda und Phosphonat erfolgte wurden die nachstehend angegebenen Hauptknetzeiten eingehalten.

Tabelle 4: Rohtonaktivierung mit verschiedenen Salzen

| Proben | Durchführung der Aktivierung |
|---|---|
| klassische Aktivierung (klassischer Bentonit) (VERGLEICH) | Einsatz von Rohbentonit 1, 3 min Vorkneten, 5 Gew.-% Soda Zugabe, Hauptknetzeit 10 min |
| Bentonit 6 (VERGLEICH) | Einsatz von Rohbentonit 2, 3 min Vorkneten, Zugabe von 2 Gew.-% HEDP ($Na_4$-Salz), Hauptknetzeit 10 min |
| Bentonit 14 | Einsatz von Rohbentonit 1, 3 min Vorkneten, 2,5 Gew.-% Soda Zugabe, kneten für 7 min, anschließend 2 Gew.-% HEDP ($Na_2$-Salz) Zugabe, 3 min kneten |
| Bentonit 15 | Einsatz von Rohbentonit 1, 3 min Vorkneten, 2,5 Gew.-% Soda Zugabe, kneten für 7 min, anschließend 2 Gew.-% HEDP ($Na_4$-Salz) Zugabe, 3 min kneten |

Die in der vorstehenden Tabelle angegebenen Gewichtsprozentangaben an Soda, sowie Phosphonaten beziehen sich rechnerisch jeweils auf das Gesamtgewicht an trockenem Bentonit, der durch Trocknung bei 130 °C bis zur Gewichtskonstanz erhalten wurde.

<u>Beispiel 2:</u>

<u>Herstellung von Bentonit-Slurry für die Retentions- und Drainageversuche</u>

In einem 5 L Becher wird 2 L Wasser vorgelegt und unter Rühren (am Pendraulikrührer mit einer Dissolverscheibe bei 930 UPM) in einem Zeitraum von bis 3 Minuten wird fein vermahlener Bentonit portionsweise zugegeben und für weitere 15 Minuten bei 1865 UPM dispergiert. Bei dieser Herstellungsweise kann der Bentonitanteil in der derart hergestellten Slurry 1-3 Gew.-%-ig, bezogen auf das Gesamtgewicht der Slurry, vorliegen.

Die so hergestellte Bentonit-Slurry wird in den Versuchen zu Retention und Drainage eingesetzt.

Beispiel 3

Drainage-Versuche

Bentonit-Slurries wurden wie in Beispiel 2 beschrieben unter Verwendung von "klassischem bzw. klassisch aktiviertem Bentonit", "Bentonit 6", "Bentonit 14" und "Bentonit 15" hergestellt.

"Bentonit 6" entspricht dabei einem Verfahren, wie es in der WO97/33040 beschrieben ist, d.h. der Calciumbentonit wird direkt mit einem Natriumsalz eines Komplexbildners umgesetzt, ohne dass zuvor eine Aktivierung mit Natriumcarbonat durchgeführt wird.

Im Rahmen der Drainage-Versuche wurde der Einfluss der Zugabe der Bentonit-Slurries in unterschiedlichen Dosagen zur Zellstoffsuspension untersucht, wobei die vorstehend angegebenen Slurries in derartigen Mengen zugesetzt wurden, dass Zellstoffsuspensionen mit Konzentrationen von 0,25 kg Bentonit pro Tonne Zellstoff bis 2 kg Bentonit pro Tonne an Zellstoff erhalten wurden.

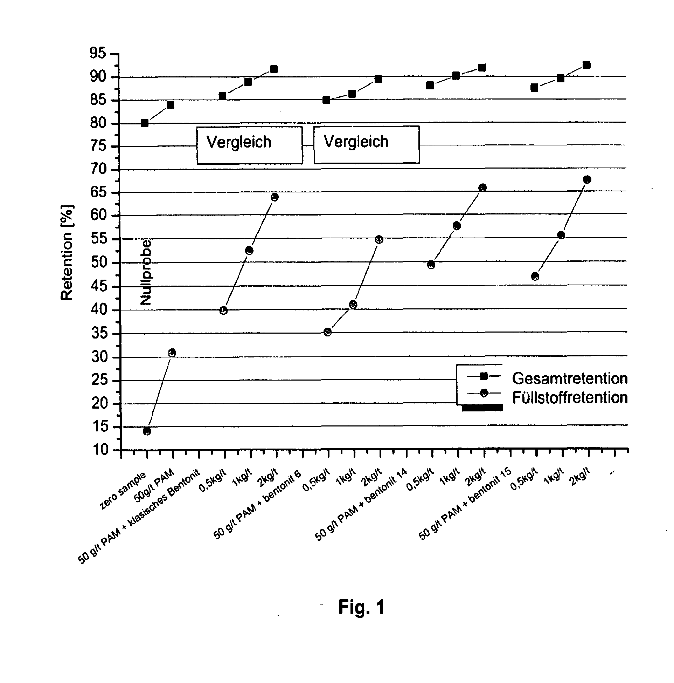

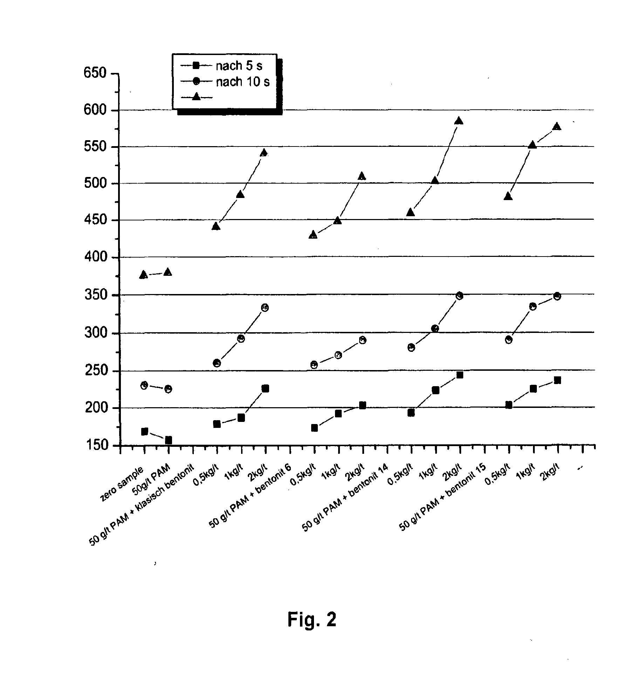

Die Drainage wurde nach 5, 10 und 30 Sekunden ermittelt. Die Daten für die Drainage und die Retention sind in den Tabellen 5 und 6 zusammengefasst und in den Figuren 1 und 2 graphisch wiedergegeben.

Tabelle 5: Ergebnisse der Versuche zur Gesamtretention und Füllstoffretention

| Menge | Gesamtretention [%] | Füllstoffretention [%] |
|---|---|---|
| Nullprobe | 80,1 | 14,1 |
| 50g/t PAM | 84 | 30,8 |
| 50 g/t PAM + klassischer Bentonit | | |
| 0,5kg/t | 86 | 39,8 |
| 1kg/t | 88,9 | 52,4 |
| 2kg/t | 91,6 | 63,8 |
| 50 g/t PAM + Bentonit 6 | | |
| 0,5kg/t | 84,9 | 35,1 |
| 1kg/t | 86,3 | 40,9 |
| 2kg/t | 89,4 | 54,6 |
| 50 g/t PAM + Bentonit 14 | | |
| 0,5kg/t | 88,1 | 49,3 |
| 1kg/t | 90,1 | 57,5 |
| 2kg/t | 91,9 | 65,7 |
| 50 g/t PAM + Bentonit 15 | | |
| 0,5kg/t | 87,6 | 46,8 |
| 1kg/t | 89,6 | 55,5 |
| 2kg/t | 92,4 | 67,4 |

Tabelle 6: Drainage [g] in Abhängigkeit von der Zeit

| | nach 5 s | nach 10 s | nach 30 s |
|---|---|---|---|
| Nullprobe | 169 | 230 | 376 |
| 50g/t PAM | 157 | 225 | 379 |
| 50 g/t PAM + klassischer Bentonit | | | |
| 0,5kg/t | 179 | 260 | 440 |
| 1kg/t | 187 | 292 | 483 |
| 2kg/t | 226 | 333 | 540 |

(fortgesetzt)

| 50 g/t PAM + Bentonit 6 | | | |
|---|---|---|---|
| 0,5kg/t | 173 | 257 | 428 |
| 1kg/t | 192 | 270 | 447 |
| 2kg/t | 203 | 290 | 508 |
| 50 g/t PAM + Bentonit 14 | | | |
| 0,5kg/t | 193 | 280 | 458 |
| 1kg/t | 223 | 305 | 502 |
| 2kg/t | 244 | 348 | 584 |
| 50 g/t PAM + Bentonit 15 | | | |
| 0,5kg/t | 203 | 290 | 480 |
| 1kg/t | 225 | 334 | 551 |
| 2kg/t | 236 | 347 | 576 |

Fig. 1 zeigt die Total- und Füllstoff-Retention mit unterschiedlich behandelten Bentoniten bei konstanter Polymerzugabe (50 g/t Zellstoff) und verschiedener Bentonitdosage.

Hierfür wurden, wie in Beispiel 2 beschrieben, Slurries unter Verwendung von " klassisch aktiviertem Bentonit", "Bentonit 6", "Bentonit 14" und "Bentonit 15" hergestellt und in derartigen Mengen Zellstoffsuspensionen zugesetzt, dass Zellstoffsuspensionen mit Konzentrationen von 0,5 kg bzw. 1 kg bzw. 2 kg Bentonit pro Tonne an Zellstoff erhalten wurden. Zudem wurde der Zellstoffsuspension Polyacrylamid (PAM, Percol® 178, Ciba AG) in einer Menge von 50 g pro Tonne an Zellstoff zugesetzt.

Beim "klassisch aktivierten Bentonit" wurde der Calciumbentonit nur mit Soda aktiviert.

Beim "Bentonit 6" erfolgte die Aktivierung wie in der WO 97/33040 beschrieben, d.h. die Aktivierung erfolgte allein durch Zugabe von Natriumphosphonat (HEDP).

"Bentonit 14" und "Bentonit 15" wurden erfindungsgemäß aktiviert, d.h. der Calciumbentonit wurde zunächst mit Soda und dann mit Natriumphosphonat (HEDP) aktiviert.

Zur Kontrolle wurde ferner eine Nullprobe vermessen, bei welcher der Papierfasersuspension weder ein kationisches Polymer noch ein Schichtsilikat zugesetzt wurde, sowie eine Probe, bei welcher der Papierfasersuspension lediglich das kationische Polymer zugesetzt wurde.

In Fig. 1 und 2 ist zu sehen, dass die erfindungsgemäß mit Soda und HEDP aktivierten Bentonite (Bentonit 14 und Bentonit 15) im Vergleich zu einem klassisch aktivierten Bentonit bei gleicher Dosierung zu einem besseren Ergebnis bei Drainage und Retention führen.

Wird der Bentonit lediglich mit Natriumphosphonat (HEDP) aktiviert (Bentonit 6) führt dies bei gleicher Dosage zu schlechteren Ergebnissen bei Retention und Drainage als bei einer zweistufigen Aktivierung mit Soda und HEDP, wie dies beim erfindungsgemäßen Verfahren erfolgt.

**Patentansprüche**

1. Verfahren zur Herstellung einer Schichtsilikatzusammensetzung, mit den Schritten:

    a. Bereitstellen mindestens eines austauschbare einwertige Kationen enthaltenden Schichtsilikats;
    b. Behandeln des mindestens einen austauschbare einwertige Kationen enthaltenden Schichtsilikats mit mindestens einer Behandlungskomponente, wobei die Behandlungskomponente ein Komplexbildner für Metalle ist.

2. Verfahren nach Anspruch 1, wobei das austauschbare einwertige Kationen enthaltende Schichtsilikat erhalten wird, indem ein Vorläufer-Schichtsilikat mit einer Aktivierungskomponente behandelt wird, wobei die Aktivierungskomponente ein Salz eines einwertigen Kations ist und das Vorläufer-Schichtsilikat ein mehrwertige Kationen enthaltendes Schichtsilikat ist.

3. Verfahren nach Anspruch 2, wobei die Aktivierungskomponente ausgewählt ist aus Alkalicarbonaten, Ammoniumcarbonat, Ammoniumhydrogencarbonat und Alkalihydrogencarbonaten.

4. Verfahren nach Anspruch 2 oder 3, wobei das mehrwertige Kationen enthaltende Schichtsilikat zunächst mit Aktivierungskomponente und anschließend mit der Behandlungskomponente behandelt wird.

5. Verfahren nach einem der vorhergehenden Ansprüche, wobei das einwertige Kationen enthaltende Schichtsilikat einen Anteil von einwertigen Kationen an der Gesamtkationenaustauschkapazität von mindestens 50 % aufweist.

6. Verfahren nach einem der vorhergehenden Ansprüche, wobei die Behandlungskomponente ein Salz eines einwertigen Kations ist.

7. Verfahren nach einem der vorhergehenden Ansprüche, wobei die Behandlungskomponente ausgewählt ist aus der Gruppe bestehend aus Phosphonaten, Hydroxycarbonsäuren, Aminocarbonsäuren, Polycarbonsäuren, Iminodibernsteinsäuresalzen, Polysuccinimid, Polysuccinimid-Teilhydrolysaten, Polyasparaginsäure und deren Gemischen.

8. Verfahren nach einem der vorstehenden Ansprüche, wobei die Behandlungskomponente bezogen auf das mindestens eine einwertige Kationen enthaltende Schichtsilikats in einem Anteil von mindestens 0,5 Gew.-% zugesetzt wird.

9. Verfahren nach einem der Ansprüche 2 bis 8, wobei das Gewichtsverhältnis der Aktivierungskomponente zur Behandlungskomponente im Bereich von 1,0 bis 4,5 gewählt ist.

10. Verwendung einer Schichtsilikatzusammensetzung hergestellt nach einem Verfahren gemäß einem der Ansprüche 1 bis 9 zur Herstellung von Papier, Pappe, Karton oder von papierhaltigen Verbundwerkstoffen.

11. Verwendung nach Anspruch 10 zur Verbesserung der Retention, insbesondere der Gesamt- und/oder Füllstoffretention, sowie der Drainage bei einer Herstellung von Papier, Pappe, Karton, papierhaltigen Verbundwerkstoffen.

12. Verwendung nach einem der Ansprüche 10 oder 11, wobei die Schichtsilikatzusammensetzung zum Streichen und/oder Beschichten von Papier, Pappe, Karton, papierhaltigen Verbundwerkstoffen und/oder zur Störstoffbindung und/oder als Komponente eines dualen Retentionsmittelsystems oder eines Mehrkomponenten-Retentionsmittelsystems eingesetzt wird.

**Claims**

1. Process for producing a sheet-silicate composition, comprising the steps of:

   a. providing at least one sheet-silicate containing exchangeable monovalent cations;
   b. treating the at least one sheet-silicate containing exchangeable monovalent cations with at least one treating component, wherein the treating component is a complexing agent for metals.

2. Process according to Claim 1, wherein the sheet-silicate containing exchangeable monovalent cations is obtained by treating a precursor sheet-silicate with an activating component, wherein the activating component is a salt of a monovalent cation and the precursor sheet-silicate is a sheet-silicate containing polyvalent cations.

3. Process according to Claim 2, wherein the activating component is selected from alkali metal carbonates, ammonium carbonate, ammonium bicarbonate and alkali metal bicarbonates.

4. Process according to Claim 2 or 3, wherein the sheet-silicate containing polyvalent cations is treated first with activating component and then with the treating component.

5. Process according to any preceding claim, wherein not less than 50% of the total cation exchange capacity of the sheet-silicate containing monovalent cations is due to monovalent cations.

6. Process according to any preceding claim, wherein the treating component is a salt of a monovalent cation.

7. Process according to any preceding claim, wherein the treating component is selected from the group consisting of phosphonates, hydroxycarboxylic acids, aminocarboxylic acids, polycarboxylic acids, imino-disuccinic acid salts, polysuccinimide, partial polysuccinimide hydrolysates, polyaspartic acid and mixtures thereof.

8. Process according to any preceding claim, wherein the treating component is added in a proportion of not less than 0.5 wt%, based on the at least one sheet-silicate containing monovalent cations.

9. Process according to any of Claims 2 to 8, wherein the weight ratio of activating component to treating component is chosen in the range from 1.0 to 4.5.

10. Use of a sheet-silicate composition obtained by a process according to any of Claims 1 to 9 in the manufacture of paper, card, board or of paper-containing composite materials.

11. Use according to Claim 10 for improving the retention, in particular the overall and/or filler retention, and also the drainage in a manufacture of paper, card, board or of paper-containing composite materials.

12. Use according to either of Claims 10 and 11, wherein the sheet-silicate composition is employed for the coating and/or surfacing of paper, card, board, paper-containing composite materials and/or for pitch control and/or as a component of a dual retention-aid system or of a multi-component retention-aid system.

**Revendications**

1. Procédé pour la préparation d'une composition de silicate à couches, présentant les étapes de :

a. mise à disposition d'au moins un silicate à couches contenant des cations monovalents pouvant être remplacés ;
b. traitement dudit au moins un silicate à couches contenant des cations monovalents pouvant être remplacés par au moins un composant de traitement, le composant de traitement étant un complexant pour métaux.

2. Procédé selon la revendication 1, le silicate à couches contenant des cations monovalents pouvant être remplacés étant obtenu en ce qu'on traite un silicate à couches précurseur par un composant d'activation, le composant d'activation étant un sel d'un cation monovalent et le silicate à couches précurseur étant un silicate à couches contenant des cations polyvalents.

3. Procédé selon la revendication 2, le composant d'activation étant choisi parmi les carbonates de métal alcalin, le carbonate ammonium, l'hydrogénocarbonate d'ammonium et les hydrogénocarbonates de métal alcalin.

4. Procédé selon la revendication 2 ou 3, le silicate à couches contenant des cations polyvalents étant d'abord traité par le composant d'activation puis par le composant de traitement.

5. Procédé selon l'une quelconque des revendications précédentes, le silicate à couches contenant des cations monovalents présentant une proportion de cations monovalents par rapport à la capacité d'échange totale de cations d'au moins 50%.

6. Procédé selon l'une quelconque des revendications précédentes, le composant de traitement étant un sel d'un cation monovalent.

7. Procédé selon l'une quelconque des revendications précédentes, le composant de traitement étant choisi dans le groupe constitué par les phosphonates, les acides hydroxycarboxyliques, les acides aminocarboxyliques, les acides polycarboxyliques, les sels de l'acide iminodisuccinique, le polysuccinimide, les hydrolysats partiels de polysuccinimide, le poly(acide aspartique) et leurs mélanges.

8. Procédé selon l'une quelconque des revendications précédentes, le composant de traitement étant utilisé, par rapport audit au moins un silicate à couches contenant des cations monovalents dans une proportion d'au moins 0,5% en poids.

9. Procédé selon l'une quelconque des revendications 2 à 8, le rapport pondéral du composant d'activation au composant de traitement étant choisi dans la plage de 1,0 à 4,5.

**10.** Utilisation d'une composition de silicate à couches préparée selon un procédé selon l'une quelconque des revendications 1 à 9 pour la production de papier, de carton-pâte, de carton ou de matériaux composites contenant du papier.

**11.** Utilisation selon la revendication 10 pour améliorer la rétention, en particulier la rétention totale et/ou la rétention des charges, ainsi que le drainage lors d'une production de papier, de carton-pâte, de carton, de matériaux composites contenant du papier.

**12.** Utilisation selon l'une quelconque des revendications 10 ou 11, la composition de silicate à couches étant utilisée pour enduire et/ou revêtir du papier, du carton-pâte, du carton, des matériaux composites contenant du papier et/ou pour la liaison d'impuretés et/ou comme composant d'un système d'agent de rétention double ou d'un système d'agent de rétention à composants multiples.

Fig. 1

**Fig. 2**

**EP 2 370 630 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0235893 A
- WO 9733040 A1
- EP 0485124 A1
- US 5266538 A
- WO 9733040 A

### In der Beschreibung aufgeführte Nicht-Patentliteratur

- **VON N. WIBERG.** Holleman-Wiberg, Lehrbuch der Anorganischen Chemie. Walter de Gruyter & Co, 1985, vol. 91.-100, 768-779
- **VON N. WIBERG.** Holleman-Wiberg, Lehrbuch der Anorganischen Chemie. Walter de Gruyter & Co, 1985, vol. 91.-100, 646-652
- **C.B. TANNER ; M.L. JACKSON.** Nomographs of Sedimentation Times for Soil Particles Under Gravity or Centrifugal Acceleration. *SOIL SCIENCE SOCIETY PROCEEDINGS,* 1947, vol. 12, 60-65